# EUROPÄISCHE PATENTANMELDUNG

(11) **EP 4 495 582 A1**
(43) Veröffentlichungstag der Anmeldung: **22.01.2025**
(21) Anmeldenummer: 24186919.7
(22) Anmeldetag: 05.07.2024
(51) Int. Cl.: G01N 21/64, G02B 21/00

(54) **VERFAHREN ZUR LOKALISIERUNG ODER ZUM VERFOLGEN VON EMITTERN**

(30) Priorität: 19.07.2023 DE 102023119102
(71) Anmelder: Abberior Instruments GmbH, 37077 Göttingen (DE)
(72) Erfinder: REUSS, Matthias, 37083 Göttingen (DE); SCHMIDT, Roman, 37077 Göttingen (DE)

(57) **Zusammenfassung**

Die Erfindung betrifft ein Verfahren und ein Mikroskop für die Lokalisierung und das Verfolgen vereinzelter Emitter in einer Probe (14). Die Probe (14) wird in einem Nahbereich (4) des vereinzelten Emitters (8) mit einer ein lokales Intensitätsminimum aufweisenden Intensitätsverteilung eines Beleuchtungslichts (12) beaufschlagt. Dabei fluktuiert die Position der Intensitätsverteilung in der Probe (14) um eine Nominalposition (2). Die Probe wird zur Emission angeregt, die Emissionen werden detektiert. Es werden Messgrößen derart erfasst, dass die aktuellen Positionen (1) der Intensitätsverteilung in der Probe (14) den detektierten Emissionen jeweils zuordenbar sind. Aus den detektierten Emissionen und den zugeordneten aktuellen Positionen (1) der Intensitätsverteilung kann eine Lage des Emitters (8) geschätzt werden.

## Beschreibung

### Technisches Gebiet der Erfindung

Die Erfindung richtet sich auf ein Verfahren und ein Mikroskop für die Lokalisierung und das Verfolgen vereinzelter Emitter in einer Probe nach dem MINFLUX- bzw. STED-MINFLUX-Prinzip. Gegenüber den aus dem Stand der Technik bekannten Verfahren der MINFLUX- und STED-MINFLUX-Mikroskopie zeichnet sich die Erfindung durch stark relaxierte Anforderungen an die Strahlpositionierungsvorrichtung aus, mit der das Beleuchtungslicht in der Probe positioniert wird.

### Stand der Technik

Ein im Stand der Technik noch junges Mikroskopieverfahren ist die MINFLUX-Nanoskopie. Bei der MINFLUX-Nanoskopie handelt es sich um Verfahren der Lokalisationsmikroskopie. Die Lokalisation einzelner Partikel, insbesondere einzelner Fluorophore, erfolgt mittels strukturierter Beleuchtungslichtverteilungen, wobei das Beleuchtungslicht an den Partikeln gestreut wird oder wobei das Beleuchtungslicht diese zu Lumineszenz, insbesondere zu Fluoreszenz, anregt und in einem solchen allgemeinen Sinne ein Anregungslicht ist. Die grundlegende Besonderheit der MINFLUX-Nanoskopie ist, dass die Beleuchtung der Partikel, insbesondere die Anregung der Fluorophore, jeweils so erfolgt, dass ein zu lokalisierender Partikel oder ein Partikel, dessen Bewegung in einer Probe verfolgt werden soll, an verschiedenen Positionen nah an einem oder an einem Minimum der Anregungslichtverteilung, welches idealerweise eine Nullstelle ist, platziert wird, wobei die Anregungslichtverteilung benachbart zum Minimum einen Intensitätsanstiegsbereich aufweist. Hierdurch wird erreicht, dass die an dem Partikel gestreuten Photonen oder die Fluoreszenzphotonen besonders viel Information über die momentane Lage des jeweiligen Partikels enthalten. Dies gilt insbesondere auch für Anwendungen, in denen die Bewegung von Fluorophoren über die Zeit verfolgt werden soll. Um die Information zu gewinnen, wird das jeweils aus dem Bereich des Minimums emittierte Licht detektiert. Das Verfolgen eines einzelnen Partikels unter Nutzung eines Anregungsminimums ist beispielsweise bekannt aus dem Patent DE 10 2011 055 367 B4, die Lokalisation eines einzelnen fluoreszenten Moleküls unter Nutzung einer Intensitätsverteilung von Anregungslicht mit einem lokalen Intensitätsminimum aus dem deutschen Patent DE 10 2013 114 860 B3.

Auf Basis dieser Grundlage sind eine Reihe von Verfeinerungen zur Informationsgewinnung entstanden, die eine Lokalisation der Fluorophore mit einer Unsicherheit im Bereich unterhalb von 2 nm sowie ein Verfolgen der Bewegung einzelner Fluorophore sowohl innerhalb eines Bereichs einiger Nanometer als auch innerhalb eines Bereichs von wenigen Mikrometern ermöglichen. Eine ausführliche, aber nicht abschließende Darstellung zur MINFLUX-Nanoskopie findet sich in F. Balzarotti et al., "Nanometer resolution imaging and tracking of fluorescent molecules with minimal photon fluxes", Science 355, 606 - 612 (2017), DOI: 10.1126/science.aak9913. Experimentell gezeigt wird eine nicht-iterative MINFLUX-Lokalisation sowie ein Verfolgen von vereinzelten Fluorophoren mittels MINFLUX. Zudem wird das Konzept des iterativen MINFLUX vorgestellt. Grundsätzlich wird, um ein Fluorophor mittels MINFLUX-Nanoskopie lokalisieren zu können, das Intensitätsminimum bzw. die Intensitätsnullstelle an einer Mehrzahl von Positionen relativ zur Lage des Fluorophors platziert.

Hierfür wird in einem vorbereitenden Schritt eine aktuelle Lage des Fluorophors mit einer ersten, geringeren Genauigkeit abgeschätzt oder auf einem alternativen Weg bestimmt. Dies kann beispielsweise mittels gewöhnlicher Lokalisationsmikroskopie (PALM, STORM) geschehen oder mittels anderer bekannter Verfahren aus dem Stand der Technik. Anschließend wird eine Intensitätsverteilung von Anregungslicht mit einem zentralen Minimum, beispielsweise in der Form eines Donuts, wie aus der STED-Mikroskopie bekannt, an einer bekannten Position platziert, die derart gewählt ist, dass die abgeschätzte Lage des Fluorophors nah am Minimum der Intensitätsverteilung liegt. Die Fluoreszenzantwort des Fluorophors wird gemessen. Dasselbe wird in der Regel für mehrere weitere Positionen der Intensitätsverteilung durchgeführt, die um die abgeschätzte Lage herum platziert sind und ggf. auch für die Position, die der abgeschätzten Lage entspricht. Die Menge aller solchen Abtastpositionen bildet ein Set von Abtastpositionen. Mittels einer ratiometrischen Auswertung der an den Abtastpositionen gemessenen Intensitäten wird die Lage des Fluorophors mit höherer Genauigkeit bestimmt. Diese genauer bestimmte Lage kann nun als Ausgangsposition für eine Wiederholung der Abfolge der vorgenannten Schritte verwendet werden, wobei die Positionen des Minimums der Intensitätsverteilung von Anregungslicht im Falle einer Lokalisation eines Partikels dichter an die abgeschätzte Lage des Fluorophors gelegt werden können. Dieses Verfahren kann iterativ fortgesetzt werden. Dieses Verfahren kann auch für verschiedene Raumrichtungen in einer zeitlichen Abfolge, insbesondere alternierend, durchgeführt werden, sodass beispielsweise die Lage des Partikel in einer Raumrichtung mit einer ersten Intensitätsverteilung mit einem in sich einer ersten Richtung erstreckenden Minimum und die Lage des Partikel in einer zweiten Raumrichtung mit einer zweiten Intensitätsverteilung mit einem in sich einer zweiten Richtung, die senkrecht zu der ersten Richtung orientiert ist, erstreckenden Minimum bestimmt wird.

Soll die Bewegung eines Partikels verfolgt werden, so kann es sinnvoll sein, den Abstand der Positionen, an denen das Intensitätsminimum jeweils platziert wird, von der im vorangehenden Schritt geschätzten Position von Schritt zu Schritt jeweils nicht zu verkleinern. Das Verfahren wird entsprechend der Beschreibung in der oben genannten Publikation mittels eines Mikroskops durchgeführt, welches sowohl einen Piezo-Scanner als auch elektro-optische Deflektoren (EOD) enthält. Mittels dieser kombinierten Scaneinrichtung kann ein Bildfeld von etwa 20 µm x 20 µm adressiert werden. Mittels der EOD allein kann ein Bildfeld von etwa 2 µm x 2 µm adressiert werden, wobei eine hochschnelle Verlagerung lediglich in einem Feld von etwa 300 nm x 300 nm möglich ist. Sowohl bei Durchführung einer Lokalisierung als auch im Falle einer Verfolgung eines Partikels erfolgt die Ansteuerung der Abtastpositionen eines Sets von Abtastpositionen ausschließlich unter Verwendung der hochschnellen EOD-Abtastung. Für eine Verlagerung des Zentrums kann dann eine Kombination aus Piezo-Scanner und EOD genutzt werden. Die Bewegung einzelner Moleküle, die nur in einem eng umgrenzten Bereich, nämlich in einem Bereich, der von einem Set von Abtastpositionen überdeckt wird, beweglich sind, kann unter Verwendung eines festen Sets von Abtastpunkten erfolgen.

In der internationalen Offenlegungsschrift WO 2018/069283 A1 werden verschiedene Ausführungsformen von MINFLUX-Verfahren beschrieben. Unter anderem wird ein Verfahren beschrieben, bei dem die Abtastpositionen eines Sets von Abtastpunkten um einen anfänglichen Ortsbereich quasi gleichzeitig abgetastet werden. Die Positionen der Nullstelle, das heißt die Abtastpunkte, werden dann abhängig von den zu jeder der Positionen registrierten Photonen des Lumineszenzlichts sukzessive in den anfänglichen Ortsbereich hinein verschoben. Eine Verschiebung in den anfänglichen Ortsbereich hinein kann dann im Extremfall bereits dann erfolgen, wenn zu einer Abtastposition ein einziges Photon registriert wurde.

In der europäischen Patentschrift EP 3 372 990 B1 wird ein Verfahren offenbart, bei dem ein Set oder Sets von Abtastpositionen mit einer lokalen Nullstelle einer Intensitätsverteilung von Fluoreszenzverhinderungslicht, die überlagert ist mit einer beispielsweise gaußförmigen Intensitätsverteilung von Anregungslicht, abgetastet werden. Die Bestimmung der Position des Fluorophors kann dann in grundsätzlich der gleichen Weise wie bei MINFLUX-Verfahren erfolgen, wobei die Abhängigkeit der Fluoreszenzintensität vom Abstand des Fluorophors bzgl. der Nullstelle der Intensitätsverteilung des Fluoreszenzverhinderungslichts sich gegenüber MINFLUX dadurch unterscheidet, dass die Fluoreszenzintensität oder die Rate, mit der Photonen detektiert werden können, mit zunehmendem Abstand abnimmt. Solche Verfahren werden in dieser Anmeldung in der Folge als STED-MINFLUX-Verfahren bezeichnet.

In Klaus C. Gwosch et al., "MINFLUX nanoscopy delivers 3D multicolor nanometer resolution in cells", Nat. Methods 17, 217 - 224 (2020), DOI: 10.1038/s41592-019-0688-0 sowie der zugehörigen "Supplementary Information" wird eine konkrete Realisierung einer dreidimensionalen Lokalisation mittels MINFLUX beschrieben. Hierfür wird ein 3D-Donut, das heißt eine Intensitätsverteilung mit einem lokalen Minimum, das in allen drei Raumrichtungen von Intensitätsanstiegsbereichen umgeben ist, verwendet, der jeweils an Abtastpositionen eines dreidimensionalen Sets von Abtastpositionen platziert wird. Es wird eine Scanvorrichtung verwendet, die neben einem Piezo-Scanner und EODs eine in der Brennweite verstellbare Linse aufweist. Für die Scanvorrichtung wird eine statische Kalibrierung durchgeführt, sodass eine genaue Zuordnung zwischen den Steuerspannungen der Komponenten und den tatsächlichen Abtastpositionen der Probe bekannt ist. Die Kalibrierdaten werden genutzt, um die Abtastpositionen in der Probe genau zu adressieren.

Den im Stand der Technik beschriebenen MINFLUX-Implementierungen, soweit sie auf einer Verlagerung einer Intensitätsverteilung basieren, ist gemein, dass die (Fluoreszenz-)Emission der zu lokalisierenden Partikel zu vorgegebenen, definierten Abtastpositionen registriert werden. Das heißt, die Position des Beleuchtungslichts in der Probe stellt einen Parameter der Messung dar, während die an dieser Position registrierte (Fluoreszenz-)Emission die Messgröße ist. Da die Verweildauer an jeder Abtastposition kurz ist (in der Größenordnung weniger Mikrosekunden), stellt diese Ausführungsform hohe Anforderungen an die dynamischen Eigenschaften der Scanvorrichtung. Insbesondere lassen sich Positionierzeiten im Mikrosekundenbereich mit mechanischen Strahlpositioniereinheiten bzw. Strahlscannern allein kaum realisieren. Selbst schnelle Galvanometer-Scanner weisen Sprungantwortzeiten von typischerweise 100 µs bis 200 µs auf.

Aus diesem Grund werden in den im oben genannten Stand der Technik beschriebenen MINFLUX-Ausführungsformen bislang regelmäßig Scanvorrichtungen eingesetzt, in denen zwei Scanner mit komplementären Eigenschaften miteinander kombiniert werden, z. B. werden auf mittels eines Galvomotors angetriebenen Kippspiegeln basierende Galvanometer-Scanner, mit denen der Strahl über größere Bildfelder positioniert werden kann, mit elektrooptischen Deflektoren, mit denen eine schnelle Positionierung des Beleuchtungslichts an den Abtastpositionen vorgenommen wird, kombiniert. In der Publikation "MINFLUX dissects the unimpeded walking of kinesin-1" (Jan O. Wolff et al., Science 379,1004-1010 (2023), DOI:10.1126/science.ade2650) wird ein alternatives Konzept zur Verlagerung einer Intensitätsverteilung mit einem lokalen Minimum beschrieben. Hierbei wird eine Intensitätsverteilung mit einem betreffenden Minimum erzeugt, indem jeweils zwei untereinander kohärente Lichtstrahlen kollimiert in unterschiedliche Teilbereiche einer Pupille eines Objektivs eingestrahlt werden. Die Lage des betreffenden Minimums, welches jeweils in einer Raumrichtung ausgedehnt ist, und die an das Minimum angrenzende Intensitätsverteilung wird nun für die MINFLUX-Abtastung deterministisch verlagert, indem die Phasenbeziehung zwischen den beiden eingestrahlten Teilstrahlen geändert wird. Die entsprechende Vorrichtung wird in der Publikation als Phasenscanner bezeichnet. Größere Verlagerungen werden durch ein Galvoscanner-System sowie durch einen Positioniertisch bewirkt.

### Aufgabe der Erfindung

Es ist nun die Aufgabe der vorliegenden Erfindung, ein MINFLUX-Verfahren oder ein STED-MINFLUX-Verfahren anzugeben, das eine Lokalisierung und/oder ein Verfolgen vereinzelter Emitter in einer Probe mit einer hohen räumlichen und/oder zeitlichen Auflösung ermöglicht, bei dem die Anforderungen an die Strahlpositionierungsvorrichtung reduziert sind.

### Lösung

Diese Aufgabe wird durch den Gegenstand der unabhängigen Ansprüche 1 (Verfahren) und 12 (MINFLUX-Mikroskop oder STED-MINFLUX-Mikroskop) gelöst. Vorteilhafte Weiterbildungen des Verfahrens sind in den Unteransprüchen 2 bis 11, vorteilhafte Weiterbildungen des MINFLUX-Mikroskops in den Unteransprüchen 13 bis 15 angegeben.

### Definitionen

Unter Emittern werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktlichtquelle wirkt, ausgehende Licht kann beispielsweise Streulicht sein, das aus einer elastischen Streuung wie beispielsweise einer Rayleigh-Streuung oder einer unelastischen Streuung wie beispielsweise einer Raman-Streuung resultiert, oder es kann Lumineszenzlicht, insbesondere Fluoreszenzlicht, sein. Wesentlich für einen Emitter ist, dass von ihm als Reaktion auf das Beleuchten sofort oder mit kleiner Zeitverzögerung Licht ausgeht. Hierbei steht die maximale Zeitverzögerung dann, wenn Bewegungen des Emitters verfolgt werden sollen, in einer Beziehung zu der zeitlichen Auflösung, mit der die Bewegungen der Licht emittierenden Partikel oder Licht emittierenden Einheiten verfolgt werden sollen, und mit der Geschwindigkeit, mit der sich die Partikel oder Einheiten in der Probe bewegen. Die Zeitverzögerungen können bis etwa 10 µs betragen, liegen in der Regel aber im Bereich bis zu einigen zehn Nanosekunden, häufig im Bereich von 1 bis 10 ns und, wenn die Emission Streulicht ist, bei null. In dieser Anmeldung dient der Begriff Fluoreszenzemitter der Bezeichnung von Emittern, die als Fluoreszenzpunktlichtquellen wirken. Emitter können beispielsweise metallische Nanopartikel sein. Unter den spezielleren Begriff Fluoreszenzemitter fallen zum Beispiel einzelne Fluoreszenzfarbstoffmoleküle oder deren fluoreszierende chemische Gruppen. Anstelle von Farbstoffen können auch andere fluoreszierende Einheiten wie zum Beispiel *Quantum Dots* oder aufwärtskonvertierende Nanopartikel zur Markierung verwendet werden. Im Kontext der Anmeldung wird dementsprechend unter Anregungslicht nicht nur Fluoreszenzanregungslicht verstanden, sondern allgemein solches Licht, das bewirkt, dass von einem Emitter Licht ausgeht.

Im Kontext der Anmeldung wird ein Emitter dann als vereinzelt bezeichnet, wenn ein Abstand zu einem nächstbenachbarten Emitter, von dem er optisch nicht unterscheidbar ist, zumindest so groß ist wie ein Abstand entsprechend dem Auflösungsvermögen der optischen Anordnung, mit der die Emissionen bei Durchführung des Verfahrens detektiert werden.

Unter Emissionsunterdrückungslicht wird in dieser Anmeldung Licht verstanden, das die Emission eines Emitters verhindert, reduziert oder gänzlich unterdrückt. Insbesondere kann das Emissionsunterdrückungslicht Stimulationslicht bzw. STED-Licht sein, das eine stimulierte Emission eines elektronisch angeregten Emitters induziert, wodurch der Emitter (zurück) in den elektronischen Grundzustand überführt und so an einer spontanen (Fluoreszenz-)Emission gehindert wird. Wichtig ist, dass das Beleuchtungslicht die Fluoreszenzemission des Emitters in Abhängigkeit von seiner Intensität moduliert, wobei sowohl eine Verstärkung der Emission (wenn das Beleuchtungslicht Anregungslicht ist) oder eine Abschwächung der Emission (wenn das Abtastlicht Emissionsunterdrückungslicht ist) möglich ist. Sofern das Beleuchtungslicht nicht selbst das Anregungslicht ist, wird der Emitter zusätzlich mit einem separaten Anregungslicht beleuchtet, das den Emitter zu einer Emission anregt.

Unter MINFLUX-Verfahren werden in dieser Anmeldung Lokalisierungs- und Trackingverfahren für vereinzelte Emitter verstanden, bei denen am Fokus in der Probe Lichtverteilungen von Beleuchtungslicht, das Lichtemissionen des Emitters anregt, erzeugt werden, wobei die Lichtverteilungen ein lokales Minimum aufweisen, und bei denen die Position eines vereinzelten Emitters durch Erfassen von Lichtemissionen des Emitters für verschiedene Lagen der Minima der betreffenden Lichtverteilungen oder für verschiedene solche Lichtverteilungen in einem Nahbereich des Emitters bestimmt wird, wobei von dem Emitter umso weniger Licht emittiert wird, je geringer der Abstand zwischen dem Emitter und dem Minimum der Lichtverteilung ist.

Dabei ist unter einem Nahbereich eines Emitters eine Fläche oder ein Volumen (beispielsweise ein Kreis oder eine Kugel) um eine vermutete Position eines vereinzelten Emitters zu verstehen. Die vermutete Position des Emitters kann dabei ein Zentrum der Fläche oder des Volumens bilden. Der Nahbereich hat insbesondere Abmessungen im Größenbereich der optischen Beugungsgrenze, d. h. weiter insbesondere erstreckt sich der Nahbereich in einer Raumrichtung (weiter insbesondere in zwei Raumrichtungen oder in drei Raumrichtungen) nicht weiter als ein kleines Vielfaches der Beugungsgrenze (bei einer gegebenen Wellenlänge der Detektion des von dem Emitter ausgehenden Lichts), weiter insbesondere das Zehnfache, weiter insbesondere das Fünffache, weiter insbesondere das Zweifache, weiter insbesondere das 1,5-fache, der Beugungsgrenze. Insbesondere erstreckt sich der Nahbereich in mindestens einer Raumrichtung nicht weiter als die Beugungsgrenze. Insbesondere kann die Beugungsgrenze dem Durchmesser einer Airy-Scheibe entsprechen. Beispielsweise kann der Nahbereich im Falle einer zweidimensionalen Lokalisation des Emitters ein Kreis mit einem Durchmesser im Bereich von 100 nm bis 2 µm, insbesondere 150 nm bis 2 µm, weiter insbesondere 200 nm bis 2 µm, weiter insbesondere 250 nm bis 2 µm, weiter insbesondere 300 nm bis 2 µm, sein. Gemäß einem weiteren Beispiel kann der Nahbereich im Falle einer zweidimensionalen Lokalisation ein Kreis mit einem Durchmesser im Bereich von 100 nm bis 2 µm, insbesondere 100 nm bis 1,5 µm, weiter insbesondere 100 nm bis 1 µm, weiter insbesondere 100 nm bis 500 nm, sein. Weitere Beispiele sind insbesondere Kreise mit einem Durchmesser von 150 nm bis 1,5 µm, 150 nm bis 1,5 µm, 200 nm bis 1,5 µm, 250 nm bis 1,5 µm, 300 nm bis 1,5 µm, 150 nm bis 1 µm, 200 nm bis 1 µm, 250 nm bis 1 µm, 300 nm bis 1 µm, 150 nm bis 500 nm, 200 nm bis 500 nm, 250 nm bis 500 nm oder 300 nm bis 500 nm. Das Zentrum des Kreises liegt dabei insbesondere an der vermuteten Position des Emitters. Im Fall einer dreidimensionalen Lokalisation kann der Nahbereich insbesondere eine Kugel mit den oben genannten Durchmessern sein.

Unter STED-MINFLUX-Verfahren werden in dieser Anmeldung den MINFLUX-Verfahren entsprechend obiger Definition entsprechende Verfahren verstanden, mit der Abweichung, dass an Stelle der Intensitätsverteilung von Anregungslicht eine Intensitätsverteilung von Emissionsunterdrückungslicht, die mit Anregungslicht überlappt, tritt. Dass die Intensitätsverteilung von Emissionsunterdrückungslicht mit Anregungslicht überlappt, bedeutet dabei, dass die Probe in dem Bereich des Intensitätsminimums und der angrenzenden Abschnitte der Intensitätsanstiegsbereiche des Emissionsunterdrückungslichts, innerhalb der ein Emitter liegt, derart mit Anregungslicht beaufschlagt wird, dass eine Emission des Emitters angeregt wird oder in Abwesenheit von Emissionsunterdrückungslicht angeregt werden würde, sodass sich das Emissionsunterdrückungslicht entsprechend seiner Intensitätsverteilung derart auf die angeregte Emission oder das Anregen der Emission auswirkt, dass eine gemessene Emission eines innerhalb der Intensitätsverteilung des Emissionsunterdrückungslichts gelegenen Emitters mit zunehmendem Abstand vom Intensitätsminimum abnimmt. Wenn das Emissionsunterdrückungslicht STED-Licht und der Emitter ein Fluoreszenzemitter ist, bedeutet das, dass die spontane Emission des Fluoreszenzemitters mit zunehmendem Abstand vom Intensitätsminimum des STED-Lichts abnimmt. Die stimulierte Emission des Emitters, die dieselbe Wellenlänge wie das STED-Licht aufweist, trägt, wie in der STED-Mikroskopie üblich, nicht zur gemessenen Emission bei, sie wird beispielsweise mittels eines Filters geblockt. Dass die Intensitätsverteilung von Emissionsunterdrückungslicht mit Anregungslicht überlappt, bedeutet dabei nicht, dass das Anregungslicht und das Emissionsunterdrückungslicht streng gleichzeitig in die Probe eingebracht werden. So ist es zum Beispiel möglich, wie in der STED-Mikroskopie üblich, dass ein kurzer Puls von Anregungslicht angewendet wird, dem ein Puls von STED-Licht als Emissionsunterdrückungslicht unmittelbar nachfolgt. Das Anregungslicht, mit dem die Intensitätsverteilung von Emissionsunterdrückungslicht überlappt, kann beispielsweise eine Intensitätsverteilung aufweisen, wie sie in der konfokalen Mikroskopie üblich ist, also zumindest näherungsweise einer Airy-Funktion oder einer Gauß-Funktion entsprechen, wobei deren zentrales Maximum mit dem Minimum des Emissionsunterdrückungslichts zusammenfallen kann. Sie kann auch einer *Top* Hat-Funktion entsprechen. Auch eine konstante Anregung im Weitfeld ist möglich.

Der Begriff STED-MINFLUX wird in einem verallgemeinerten Sinn verwendet, er soll keinesfalls so verstanden werden, dass das Emissionsunterdrückungslicht STED-Licht sein muss.

Bei der MINFLUX-Mikroskopie und STED-MINFLUX-Mikroskopie wird die Probe mit fokussiertem Beleuchtungslicht beleuchtet, wobei das Beleuchtungslicht um einen geometrischen Fokus in der Probe herum eine Intensitätsverteilung mit einem zentralen Intensitätsminimum, insbesondere einer Intensitätsnullstelle, ausbildet. Die Lage eines einzelnen Emitters relativ zu dem zentralen Minimum bestimmt dann die Intensität bzw. die Photonenemissionsrate der Lichtemissionen des Emitters, welche zur Lokalisation des Emitters genutzt werden. Intensitätsverteilungen mit einem zentralen Minimum können insbesondere durch Phasenmodulation des Beleuchtungslichts durch einen Phasenfilter oder einen räumlichen Lichtmodulator (*spatial light modulator,* SLM) im Beleuchtungsstrahlengang, Fokussierung des Beleuchtungslichts mittels einer Objektivlinse und ggf. zusätzlich Zirkularpolarisation des Beleuchtungslichts erzeugt werden. Die Intensitätsverteilung entsteht dann am geometrischen Fokus durch Interferenz.

Unter einer donutförmigen Intensitätsverteilung wird in dieser Anmeldung eine spezielle Form einer Intensitätsverteilung mit einem zentralen Minimum verstanden, die ein Minimum aufweist, das in allen Raumrichtungen innerhalb einer gegebenen Ebene von Intensitätsanstiegsbereichen umgeben ist.

Erstreckt sich dieses Minimum entlang einer Achse senkrecht zu dieser Ebene, wird dieses Minimum in dieser Anmeldung als 2D-Minimum bezeichnet. Ein 2D-Minimum kann beispielsweise mittels einer Vortex-Phasenplatte im Strahlengang erhalten werden, wobei sich das Minimum dann beispielsweise entlang der optischen Achse eines Objektivs erstrecken kann.

Unter einem 3D-Minimum wird in dieser Anmeldung ein Minimum verstanden, das in allen Raumrichtungen von Intensitätsanstiegsbereichen umgeben ist. Ein 3D-Minimum kann beispielsweise mittels einer sogenannten *annular phase plate* oder durch Überlagerung zweier Lichtstrahlen, wobei jeweils in einer Pupille die Wellenfront des einen der beiden mittels einer sogenannten *annular phase plate* und die des anderen mittels einer Vortex-Phasenplatte in der Phase moduliert wird, erhalten werden. Auch ein 3D-Minimum kann in einer gegebenen Ebene eine donutförmige Intensitätsverteilung aufweisen.

Der Begriff Lokalisierung beschreibt in dieser Anmeldung ein Verfahren, bei dem eine Lage eines einzelnen Emitters in einer Probe ermittelt wird. Im Gegensatz zu herkömmlichen lichtmikroskopischen Verfahren muss hierbei insbesondere keine optische Abbildung der Probe erfolgen. Vielmehr werden bei dem erfindungsgemäßen MINFLUX-Lokalisierungsverfahren Lichtemissionen des Emitters für verschiedene Positionen der Intensitätsverteilung des Beleuchtungslichts detektiert und aus diesen wird die Lage des Emitters bestimmt, beispielsweise mit einem Positionsschätzer berechnet. Dieser Vorgang kann nacheinander für mehrere einzelne Emitter durchgeführt werden, und die bestimmten Lagen der Emitter können in einer Lokalisationskarte dargestellt werden, die ein hochauflösendes lichtmikroskopisches Bild ergeben kann.

Unter dem Verfolgen (auch als Tracking bezeichnet) eines Emitters wird das Bestimmen einer Trajektorie eines Emitters, der sich in der Probe bewegt, insbesondere durch ein zeitlich aufeinanderfolgendes mehrfaches Lokalisieren verstanden.

Eine Strahlpositionierungsvorrichtung ist im Kontext der vorliegenden Anmeldung eine Vorrichtung, die dazu ausgebildet ist, eine Intensitätsverteilung eines Beleuchtungslichts in einer Probe und eine Probe im Verhältnis zueinander zu verlagern. Hierdurch verlagert, betrachtet aus dem Bezugssystem der Probe, eine Strahlpositionierungsvorrichtung eine Intensitätsverteilung des Beleuchtungslichts in der Probe. Von dem Begriff Strahlpositionierungsvorrichtung sind insbesondere Strahlscanner, Phasenscanner, wie aus der oben genannten Publikation "MINFLUX dissects the unimpeded walking of kinesin-1" bekannt, und Positioniertische umfasst.

Eine Lichtverlagerungseinheit ist im Kontext der vorliegenden Anmeldung eine Vorrichtung, die dazu ausgebildet ist, eine Intensitätsverteilung eines Beleuchtungslichts in einer Probe durch eine Einwirkung auf das Beleuchtungslicht, beispielsweise durch eine Ablenkung, in einer Probe zu verlagern, während die Probe in einer Ruhelage verbleibt.

Ein Strahlscanner ist im Kontext der vorliegenden Anmeldung eine Vorrichtung, die dazu ausgebildet ist, einen Strahl des Beleuchtungslichts, das heißt einen Beleuchtungslichtstrahl, mittels einer optischen Komponente oder mittels mehrerer optischer Komponenten zu verlagern, sodass der Fokus des Beleuchtungslichts auf oder in der Probe in mindestens einer Raumrichtung verschoben wird. Die Verschiebung des Fokus kann dabei insbesondere in zwei Raumrichtungen, weiter insbesondere in einer Fokusebene, die senkrecht zu einer optischen Achse eines Objektivs liegt, erfolgen. Die Raumrichtungen können in verschiedensten Koordinatensystemen definiert sein, z.B. in kartesischen Koordinaten (z.B. x- und y-Richtung), in Polarkoordinaten oder in Kugelkoordinaten (z.B. radiale und azimutale Richtung). Der Strahlscanner kann z.B. mechanische Scanner, insbesondere auf je mit einem Galvomotor verbundenen Kippspiegeln basierende Scanner, elektrooptische Deflektoren oder akustooptische Deflektoren umfassen.

Unter einem Galvoscanner wird im Rahmen dieser Anmeldung ein Modul mit einem Galvomotor und einem mit diesem verbundenen und durch den Galvomotor bewegbaren Kippspiegel verstanden. Ein Galvoscanner kann zusätzlich andere Elemente als Galvomotor und Kippspiegel aufweisen.

Unter einem Galvoscanner-System wird im Rahmen dieser Anmeldung eine Scaneinheit, die einen oder mehrere Galvoscanner aufweist, das als Ganzes eingerichtet ist, einen Lichtstrahl in einer oder mehreren Raumrichtungen zu verlagern und/oder abzulenken.

Ein mechanischer Scanner ist im Kontext der vorliegenden Anmeldung ein Scanner, der ein Beleuchtungslicht variabel ablenkt, wobei das Variieren der Ablenkung erfolgt, indem mindestens eine optische Komponente, z.B. ein Spiegel, bewegt wird. Die Bewegung kann insbesondere eine Drehung, insbesondere eine Verkippung, um eine oder mehrere Drehachsen sein. Demnach ist sowohl ein Galvoscanner oder ein Galvoscanner-System als auch ein mikro-elektromechanisch aktuierter Scanner, das heißt ein MEMS-Scanner, ein mechanischer Scanner im Sinne dieser Anmeldung. Ebenso ist ein auf rotierbaren Risley-Prismen basierender Scanner ein mechanischer Scanner im Sinne dieser Anmeldung.

Der Strahlscanner kann von einer Steuereinrichtung Ansteuersignale, insbesondere elektrische Signale, erhalten, die einen Zustand der mindestens einen optischen Komponente beeinflussen, um den Beleuchtungslichtstrahl an eine gewünschte Position zu verlagern. Wenn es sich bei dem Strahlscanner um einen mechanischen Scanner mit mindestens einer beweglichen optischen Komponente handelt, sind dann den Ansteuersignalen Sollstellungen oder Sollbewegungen der mindestens einen optischen Komponente zugeordnet, welche durch die Ansteuersignale bestimmt werden.

### Beschreibung der Erfindung

Ein erster Aspekt der Erfindung betrifft ein Verfahren für die Lokalisierung oder für das Verfolgen eines vereinzelten Emitters mittels eines MINFLUX-Verfahrens oder eines STED-MINFLUX-Verfahrens in einer Probe, mit dem die Lage des einzelnen Emitters in einer Probe bestimmt und / oder die Lage des Emitters zeitlich verfolgt wird.

Hierzu wird die Probe in einem Nahbereich des vereinzelten Emitters mit einer ein lokales Intensitätsminimum aufweisenden Intensitätsverteilung eines Beleuchtungslichts beaufschlagt, wobei an das Intensitätsminimum des Beleuchtungslichts in mindestens einer Raumrichtung beiderseits Intensitätsanstiegsbereiche angrenzen.

Das Beleuchtungslicht kann einerseits Anregungslicht sein, das den Emitter zur Abgabe einer Emission, insbesondere einer Fluoreszenzemission oder einer Streulichtemission, anregt. Das Beleuchtungslicht kann aber auch ein Emissionsunterdrückungslicht sein, das eine Emission des Emitters, das heißt eine von dem Emitter ausgehende Emission, verhindert, reduziert oder gänzlich unterdrückt. Insbesondere kann das Emissionsunterdrückungslicht Stimulationslicht sein, das eine stimulierte Emission eines elektronisch angeregten Emitters induziert und so eine nachfolgende (Fluoreszenz-)Emission des Emitters verhindert. Sofern das Beleuchtungslicht nicht selbst ein Anregungslicht ist, wird der Emitter zusätzlich mit einem separaten Anregungslicht beleuchtet.

Emissionen des Emitters werden detektiert. Weiter wird die jeweils aktuelle Position der Intensitätsverteilung in der Probe messtechnisch erfasst oder es wird eine Messgröße erfasst oder es werden mehrere Messgrößen erfasst, aus der oder aus denen die jeweils aktuelle Position der Intensitätsverteilung des Beleuchtungslichts in der Probe bestimmt werden kann oder, in bevorzugten Ausführungsformen, bestimmt wird. Die messtechnische Erfassung erfolgt dabei derart, dass die jeweils aktuelle Position der Intensitätsverteilung in der Probe den detektierten Emissionen jeweils zugeordnet werden kann oder zugeordnet wird. Hierbei ist in der Regel unter der Position der Intensitätsverteilung des Beleuchtungslichts die Position eines Fokuspunktes des Beleuchtungslichts zu verstehen, an dem insbesondere das lokale Intensitätsminimum der Intensitätsverteilung des Beleuchtungslichts ausgebildet ist. In der Folge wird der Begriff "Position des Beleuchtungslichts in der Probe" gleichbedeutend mit dem Begriff "Position der Intensitätsverteilung des Beleuchtungslichts in der Probe" verwendet.

Das erfindungsgemäße Verfahren unterscheidet sich von den aus dem Stand der Technik bekannten MINFLUX-Verfahren nun darin, dass die Intensitätsverteilung des Beleuchtungslichts nicht an aufeinanderfolgenden, wohldefinierten Abtastpositionen in der Probe positioniert oder kontinuierlich entlang wohldefinierter Bahnen in der Probe bewegt wird, sondern dass die Intensitätsverteilung in nicht-deterministischer Weise in dem Nahbereich um eine Nominalposition in der Probe fluktuiert. Dies schließt nicht aus, dass die Intensitätsverteilung relativ zu der Probe zusätzlich auch kontrolliert, insbesondere mit Strahlpositionierungsmitteln oder durch Verschieben der Probe, verlagert werden kann; allerdings ist eine kontrollierte Positionierung oder Bewegung der Intensitätsverteilung in der Probe während der Durchführung des erfindungsgemäßen Verfahrens nicht erforderlich. Das erfindungsgemäße Verfahren bietet damit den Vorteil, dass eine hochgenaue und hochstabile Positionierung der Intensitätsverteilung in der Probe nicht erforderlich ist und das Verfahren auch dann angewendet werden kann, wenn der Strahlengang des Beleuchtungslichts Mittel zur Beeinflussung des Beleuchtungslichts, beispielsweise Strahlablenkmittel, umfasst, die höchsten Anforderungen an Dynamik, Positionierungsgenauigkeit und Positionierungsstabilität (wie es konventionelle MINFLUX-Verfahren erfordern) nicht genügen.

Aus den während der Messung detektierten und der jeweils aktuellen Position der Intensitätsverteilung zugeordneten Emissionen kann im direkten Anschluss oder zeitlich getrennt in einem nachgelagerten Auswerteschritt die Lage des Emitters in der Probe im Zeitraum der Messung bestimmt werden. Dabei können sowohl das Bestimmen der jeweils aktuellen Positionen der Intensitätsverteilung des Beleuchtungslichts in der Probe aus der oder den erfassten Messgrößen als auch das Zuordnen der jeweils aktuellen Positionen der Intensitätsverteilung des Beleuchtungslichts in der Probe zu den jeweils detektierten Emissionen in dem nachgelagerten Auswerteschritt erfolgen. Um dies zu ermöglichen, können beispielsweise die erfassten Messgrößen und die detektierten Emissionen einander zugeordnet oder jeweils einer gemeinsamen Zeitachse zugeordnet registriert werden. Soll die Lage des Emitters in der Probe im Zeitraum der Messung im direkten Anschluss an die Messung bestimmt werden, so erfolgt während des Zeitraums der Messung oder im direkten Anschluss an die Messung das Zuordnen der jeweils aktuellen Positionen der Intensitätsverteilung des Beleuchtungslichts in der Probe zu den jeweils detektierten Emissionen. Sofern die jeweils aktuelle Position der Intensitätsverteilung in der Probe nicht direkt messtechnisch erfasst wird, erfolgt während des Zeitraums der Messung oder im direkten Anschluss an die Messung auch das Bestimmen der jeweils aktuellen Positionen der Intensitätsverteilung des Beleuchtungslichts in der Probe aus der oder den erfassten Messgrößen. Aus einer fortlaufenden Messung zu einer Nominalposition können auch mehrere Lagen des Emitters bestimmt werden, die zu unterschiedlichen Teilzeiträumen gehören. Dies gilt auch dann, wenn die Lage des Emitters in der Probe, oder hier genauer, die Lagen des Emitters, zeitlich getrennt von der Messung in einem nachgelagerten Auswerteschritt bestimmt werden. Die mehreren bestimmten Lagen können eine Trajektorie des Emitters beschreiben. Kann die Lage des Emitters in der Probe als fest angenommen werden, kann aus den mehreren bestimmten Lagen auf eine Messunsicherheit hinsichtlich der Bestimmung der Lage geschlossen werden.

Es können auch aufeinanderfolgende Messzyklen durchgeführt werden, wobei für jeden Messzyklus eine Lage des Emitters bestimmt wird. Nachdem ein Messzyklus abgeschlossen wurde, können weitere Messzyklen an demselben Emitter erfolgen, um dessen Position im zeitlichen Verlauf zu bestimmen (Tracking). Insbesondere, wenn der Emitter in der Probe diffundieren kann oder wenn sich der Emitter in der Probe gerichtet bewegt, sodass sich mit der Lage des Emitters in der Probe auch die Lage des Nahbereichs des Emitters in der Probe in der Zeit ändern kann oder ändert, ist es vorteilhaft, die Lage des Emitters jeweils zwischen aufeinanderfolgenden Messzyklen zu bestimmen und die Nominalposition der Intensitätsverteilung des Beleuchtungslichts zu aktualisieren. Hierbei kann die aktualisierte Nominalposition der zu dem vorangehenden Messzyklus bestimmten Lage entsprechen. Die aktualisierte Nominalposition kann aber, beispielsweise wenn sich der Emitter gerichtet in der Probe bewegt, aus den in mehreren vorangehenden Messzyklen bestimmten Lagen abgeleitet werden. Dabei kann für die Durchführung des weiteren Messzyklus oder für jeden sich einem Messzyklus anschließenden Messzyklus optional die Lichtintensität des Beleuchtungslichts geändert, insbesondere erhöht werden und / oder es kann eine Eigenschaft der Fluktuation des Beleuchtungslichts in der Probe angepasst werden; auf die betreffenden Eigenschaften wird weiter unten näher eingegangen. Auf diese Weise kann z. B. ein iteratives MINFLUX-Verfahren umgesetzt werden.

In einer bevorzugten Ausführungsform des Verfahrens ist die Nominalposition eines ersten Messzyklus, der gemäß der Erfindung ausgeführt wird, eine vermutete Lage des Emitters in der Probe, die in einem Vorlokalisierungsschritt bestimmt wird. Hierzu kann eine Lokalisierung mit einer unabhängigen Methode, insbesondere mit geringerer Genauigkeit, verwendet werden (beispielsweise Rasterscanning oder PALM-/STORM-Lokalisierung), es kann aber auch eine vorhergehende MINFLUX-Lokalisierung, beispielsweise wie sie aus dem Stand der Technik bekannt ist, für die Vorlokalisierung verwendet werden. So kann in einer bevorzugten Ausführungsform beispielsweise auch eine iterative MINFLUX-Messung, bei der die Intensitätsverteilung des Beleuchtungslichts in jedem Schritt der Iteration jeweils an aufeinanderfolgenden, wohldefinierten Abtastpositionen in der Probe positioniert oder kontinuierlich entlang wohldefinierter Bahnen in der Probe bewegt wird, durchgeführt werden, an die sich eine Messung anschließt oder an die sich mehrere Messzyklen anschließen, bei der oder bei denen die Position der Intensitätsverteilung in der Probe um eine Nominalposition fluktuiert und bei der oder bei denen den Emissionen jeweils die messtechnisch erfasste, aktuelle Position der Intensitätsverteilung des Beleuchtungslichts zugeordnet wird.

In einer anderen, insbesondere im Kontext von (Drug-)Screening-Anwendungen anwendbaren, Ausführungsform kann die Nominalposition auch eine bekannte oder vorgegebene Bindungsstelle in der Probe sein, an der eine mit dem Emitter markierte Struktur gebunden ist oder binden kann.

In einer bevorzugten Ausführungsform des Verfahrens wird die Fluktuation der Position des Beleuchtungslichts um eine Nominalposition in der Probe durch eine oder mehrere bewegliche Komponenten einer Strahlpositionierungsvorrichtung, beispielsweise eines Strahlscanners in einem Strahlengang des Beleuchtungslichts, bewirkt. Diese bewegliche Komponente kann oder diese beweglichen Komponenten können beispielsweise ein oder mehrere Kippspiegel eines Galvoscanner-Systems sein, das auch für andere (Bild-) Aufnahmemodalitäten genutzt werden kann bzw. für diese vorgesehen ist. Die bewegliche Komponente kann eine Komponente einer Lichtverlagerungseinheit oder auch ein beweglicher Probentisch, beispielsweise ein piezoelektrisch aktuierbarer Probentisch sein.

Ist die bewegliche Komponente ein Kippspiegel oder sind die beweglichen Komponenten Kippspiegel, kann die jeweils aktuelle Lage der Intensitätsverteilung in der Probe insbesondere aus der Auslenkung des Kippspiegels oder aus der Menge der Auslenkungen der Kippspiegel bestimmt werden. Die Auslenkung des Kippspiegels oder jedes Kippspiegels kann beispielsweise, wenn die Kippspiegel jeweils Teil eines Galvoscanners sind, mit einem integrierten Rotationsencoder oder unter Verwendung eines Hilfslichtstrahls, ggf. eines Hilfslichtstrahls je Spiegel, der jeweils ebenfalls von dem zugehörigen Kippspiegel abgelenkt und auf einen positionsempfindlichen Lichtdetektor gerichtet wird, gemessen werden. Insbesondere wenn je Kippspiegel ein Hilfslichtstrahl genutzt wird, kann ein Hilfslichtstrahl zur Messung der Auslenkung auch auf die Rückseite des Spiegels gerichtet werden, bevorzugt wird der Hilfslichtstrahl aber auf die Vorderseite des Spiegels, das heißt die Seite des Spiegels, die den Beleuchtungslichtstrahl reflektiert, gerichtet. Die jeweils aktuelle Position der Intensitätsverteilung des Beleuchtungslichts in der Probe kann dann aus der messtechnisch erfassten Auslenkung des Kippspiegels oder der den messtechnisch erfassten Auslenkungen der Kippspiegel bestimmt werden. Bei dem Bestimmen der jeweils aktuellen Position der Intensitätsverteilung des Beleuchtungslichts in der Probe sind die Abbildungseigenschaften der optischen Vorrichtung, mit der der Beleuchtungslichtstrahl in die Probe geleitet und fokussiert wird, zu berücksichtigen; wie dies erfolgen kann, ist dem Fachmann geläufig. Weist der Strahlscanner neben einem oder mehreren Kippspiegeln weitere bewegliche Komponenten auf, die die Fluktuation der Position der Intensitätsverteilung in der Probe mit verursachen, so können deren aktuelle Einstellungen ebenfalls messtechnisch erfasst und bei dem Bestimmen der jeweils aktuellen Position der Intensitätsverteilung des Beleuchtungslichts in der Probe mit berücksichtigt werden.

In einer weiter bevorzugten Ausführungsform kann die jeweils aktuelle Lage der Intensitätsverteilung in der Probe bestimmt werden, indem ein Hilfslichtstrahl derart über alle Komponenten des Strahlscanners, die im Zusammenwirken die Fluktuation der Position der Intensitätsverteilung in der Probe verursachen, geführt wird, dass der Hilfslichtstrahl jeweils eine mit der Ablenkung des Beleuchtungslichtstrahls identische Ablenkung erfährt, wobei die Ablenkung des Hilfslichtstrahls messtechnisch erfasst wird. Aus den Ablenkungen kann dabei eine Verlagerung des betreffenden Lichtstrahls an einem Ort eines Zwischenbilds bzgl. einer optischen Achse des Strahlengangs und eine Winkeländerung an einem Ort eines Zwischenbilds bzgl. einer optischen Achse des Strahlengangs resultieren. Hierbei entspricht der Verlagerung an einem Ort eines Zwischenbilds einer Verkippung an einem Ort einer Pupille, und eine Verkippung an einem Ort eines Zwischenbilds entspricht einer Verlagerung an einem Ort einer Pupille.

Dass ein Hilfslichtstrahl jeweils eine mit der Ablenkung des Beleuchtungslichtstrahls identische Ablenkung erfährt, kann in einer bevorzugten Ausführungsform erreicht werden, indem ein Hilfslichtstrahl mittels eines Strahlteilers einerseits der betreffenden Komponenten des Strahlscanners in den Strahlengang des Beleuchtungslichtstrahls eingekoppelt wird und andererseits dieser Komponenten mittels eines weiteren Strahlteilers ausgekoppelt wird; nach dem Auskoppeln wird der Hilfslichtstrahl derart auf einen oder mehrere ortsempfindliche Detektoren geleitet, dass aus den Messignalen die oben genannte Verlagerung oder die Verkippung oder sowohl die oben genannte Verlagerung als auch die Verkippung bestimmt werden kann. Aus der Verlagerung und/oder der Verkippung wird dann die korrespondierende Position der Intensitätsverteilung des Beleuchtungslichts in der Probe bestimmt. Die Strahlteilung beruht darauf, dass der Hilfslichtstahl und der Beleuchtungslichtstrahl bestimmte unterschiedliche optische Eigenschaften aufweisen, insbesondere können sie unterschiedliche Wellenlängen oder unterschiedliche Polarisationen aufweisen. Welche Größe oder welche Größen - Verkippung, Versatz oder Verkippung und Versatz - bevorzugt gemessen werden, ist abhängig von dem Aufbau des Strahlscanners, insbesondere, ob dieser als Pupillenscanner oder beispielsweise als Quad-Scanner mit vier Kippspiegeln, die um eine Zwischenbildposition herum positioniert sind, aufgebaut ist; Quad-Scanner sind z. B. in der internationalen Patentoffenlegungsschrift WO 2010/069987 A1 beschrieben. In bevorzugten Ausführungsformen, bei der die die Fluktuation der Position des Beleuchtungslichts bewirkenden Komponenten des Strahlscanners einen Quad-Scanner bilden, wird insbesondere der Versatz an einem Ort eines Zwischenbildes gemessen, weiter bevorzugt werden sowohl der Versatz als auch die Verkippung gemessen. Das Messen beider Größen ermöglicht, die Position des Beleuchtungslichts in der Probe hochgenau unter Berücksichtigung des Einflusses einer Verlagerung des Beleuchtungslichtstrahls in der Pupille des den Beleuchtungslichtstrahl fokussierenden Objektivs zu bestimmen. Dies gilt auch, wenn die betreffenden Komponenten des Strahlscanners einen Pupillenscanner bilden oder enthalten. In diesen bevorzugten Ausführungsformen wird die jeweils aktuelle Position der Intensitätsverteilung des Beleuchtungslichts in der Probe aus der messtechnisch erfassten Verlagerung und/oder der messtechnisch erfassten Verkippung bestimmt. Dabei sind die Abbildungseigenschaften der optischen Vorrichtung, mit der der Beleuchtungslichtstrahl in die Probe geleitet und fokussiert wird, zu berücksichtigen; wie dies erfolgen kann, ist dem Fachmann geläufig.

Dass ein Hilfslichtstrahl derart über alle Komponenten des Strahlscanners, die im Zusammenwirken die Fluktuation der Position der Intensitätsverteilung in der Probe verursachen, geführt wird, dass der Hilfslichtstrahl eine der Ablenkung des Beleuchtungslichtstrahls identische Ablenkung erfährt, kann ebenfalls erreicht werden, indem ein Hilfslichtstrahl einerseits der betreffenden Komponenten des Strahlscanners unter einem flachen Winkel in den Strahlengang des Beleuchtungslichtstrahls derart in den Strahlengang des Beleuchtungslichtstrahls eingekoppelt wird, dass er von allen betreffenden Komponenten des Strahlscanners in derselben Weise abgelenkt wird wie der Beleuchtungslichtstrahl, und andererseits dieser Komponenten unter einem flachen Winkel ausgekoppelt wird.

In einer weiteren bevorzugten Ausführungsform kann ein Anteil des von einer Beleuchtungslichtquelle ausgehenden Lichtstrahls, nachdem er über alle Komponenten des Strahlscanners, die im Zusammenwirken die Fluktuation der Position der Intensitätsverteilung in der Probe verursachen, geführt wurde, mittels eines Strahlteilers aus dem von der Beleuchtungslichtquelle ausgehenden Lichtstrahl ausgekoppelt werden. Der aus diesem Lichtstrahl ausgekoppelte Anteil wird dann derart auf einen oder mehrere ortsempfindliche Detektoren geleitet, dass aus den Messignalen die Verlagerung oder die Verkippung oder sowohl die Verlagerung als auch die Verkippung, die der ausgekoppelte Anteil des Lichtstrahls durch die betreffenden Komponenten des Strahlscanners erfahren hat, bestimmt werden kann.

Die Fluktuation der Position des Beleuchtungslichts um eine Nominalposition in der Probe kann durch schnelle unregelmäßige oder als unregelmäßig erscheinende Bewegungen der den Strahl verlagernden mechanischen Komponenten der Strahlpositionierungseinrichtung, zum Beispiel von Kippspiegeln in einem Galvoscanner-System, bewirkt werden, die diese mechanischen Komponenten ausführen. Galvoscanner sowie Galvoscanner-System, die in einem geschlossenen Regelkreis betrieben werden, führen, ebenso wie beispielsweise piezo-aktuierte Probentische, auch infolge der kontinuierlichen Nachführung durch den Regelkreis permanente Korrekturbewegungen aus, um die Sollstellung des Regelkreises zu erreichen, aus; auch diese Korrekturbewegungen sind unregelmäßig oder erscheinen als unregelmäßig. Die schnellen unregelmäßigen oder als unregelmäßig erscheinenden Bewegungen zum Beispiel der Kippspiegel werden im Rahmen dieser Anmeldung als Jitter bezeichnet. Der Begriff Jitter erfasst dabei im Rahmen dieser Anmeldung nicht nur Bewegungen der Kippspiegel um ihre Kippachse, sondern sämtliche schnellen Bewegungen der Kippspiegel, die zu unregelmäßigen oder unregelmäßig erscheinenden Ablenkungen des Beleuchtungslichts und damit zu einer Fluktuation der Position des Beleuchtungslichts in der Probe führen. Der Begriff Jitter erfasst im Rahmen dieser Anmeldung auch entsprechende Bewegungen von Komponenten anderer mechanischer Scanner oder entsprechende Bewegungen anderer Komponenten einer Strahlpositionierungsvorrichtung wie zum Beispiel eines positionierbaren Probentisches oder anderer Lichtverlagerungseinheiten; wesentlich für das Vorliegen von Jitter ist, dass eine unregelmäßige oder unregelmäßig erscheinende Bewegung einer Komponente des Mikroskops vorliegt, wobei sich die Bewegung der Komponente auf die Position der Intensitätsverteilung des Beleuchtungslichts auswirkt. Jitter kann somit beispielsweise auch vorliegen, wenn eine grundsätzlich ortsfest gelagerte oder nicht automatisch gezielt deterministisch verlagerbare Komponente wie ein Umlenkspiegel oder eine Linse tatsächlich unregelmäßige oder unregelmäßig erscheinende Bewegungen ausführt. Unter unregelmäßig erscheinenden Bewegungen werden solche Bewegungen verstanden, die zwar eine Regelmäßigkeit aufweisen, deren Regelmäßigkeit aber nicht bekannt ist oder nicht erfasst wird. Jitter kann insbesondere auch in dem Fall auftreten, dass eine Sollstellung der Strahlpositionierungsvorrichtung über eine Zeitdauer konstant ist. In diesem Fall verursacht der Jitter eine Fluktuation der Position der Intensitätsverteilung des Beleuchtungslichts um eine Sollposition, das heißt, er verursacht die Fluktuation der Position des Beleuchtungslichts um eine Nominalposition in der Probe.

Schnelle unregelmäßige oder unregelmäßig erscheinenden Bewegungen der einen oder mehreren bewegliche Komponenten einer Strahlpositionierungsvorrichtung können auch durch Schwingungen oder Schall, zum Beispiel durch Umgebungsgeräusche, angeregt werden. Jitter kann seine Ursache aber zum Beispiel auch in Magnetfeldfluktuationen im Galvoantrieb eines Galvoscanners oder bei MEMS-Scannern auch in Fluktuationen elektrischer Felder haben.

Der der Strahlpositionierungsvorrichtung inhärente, durch Umgebungseinflüsse hervorgerufene oder durch einen Regelkreis eingeführte Jitter kann, gegebenenfalls abhängig von Eigenschaften des Abbildungssystems, mit dem das Beleuchtungslicht in die Probe abgebildet bzw. fokussiert wird, insbesondere von dessen Vergrößerung, bereits genügen, dass ein zur Durchführung des erfindungsgemäßen Verfahrens ausreichend großer Bereich um den Emitter in der Probe von dem Beleuchtungslicht überstrichen wird, sodass keine zusätzliche Fluktuation der Position des Beleuchtungslichts in der Probe eingeführt werden muss.

Sofern der der Strahlpositionierungsvorrichtung inhärente, durch Umgebungseinflüsse hervorgerufene und/oder durch einen Regelkreis eingeführte Jitter, der bei einer Grundeinstellung der Regelparameter auftritt, aber keine ausreichende Fluktuation der Position des Beleuchtungslichts in der Probe bewirken, kann die Fluktuation gezielt verstärkt werden.

Beispielsweise hängt die Stärke der durch den Regelkreis eingeführten Korrekturbewegungen, von den jeweils gewählten Regelparametern ab. In PID-Reglern beispielsweise führen insbesondere groß gewählte Proportional- und Differentialanteile zu schnellen Regelbewegungen und mit hohen Amplituden. Diese nehmen besonders stark zu, wenn der Regelkreis in der Nähe von Resonanzfrequenzen betrieben wird. Insofern werden in einer bevorzugten Ausführungsform des Verfahrens die Regelparameter so gewählt, dass eine derartige Fluktuation der Position der Intensitätsverteilung des Beleuchtungslichts erfolgt, dass während der Durchführung einer erfindungsgemäßen Messung aktuelle Positionen erreicht werden, die einen vorgegebenen oder vorgebbaren Mindestabstand zur Nominalposition aufweisen. Die Regelparameter können auch so gewählt werden, dass die Fluktuation vorgegebene oder vorgebbare Momente, beispielsweise eine vorgegebene oder vorgebbare Varianz aufweist. Dabei kann die Fluktuation um die Nominalposition angenähert normalverteilt sein. Allgemein kann der regelungsbasierte Jitter durch eine gezielte Einstellung der Regelparameter konditioniert werden.

Eine weitere Möglichkeit, die Fluktuation gezielt zu verstärken, besteht darin, Jitter aktiv anzuregen, also einen angeregten Jitter hervorzurufen. Beispielsweise kann gezielt Schall oder Ultraschall eingesetzt werden, um auf die Strahlpositioniereinrichtung oder einzelne Komponenten oder eine einzelne Komponente der Strahlpositioniereinrichtung einzuwirken, wobei die Einwirkung vermittelt durch die Halterung der Komponente erfolgen kann.

In einer anderen bevorzugten Ausführungsform des Verfahrens wird ein Steuereingang der Strahlpositionierungsvorrichtung mit einem Zufallssignal beaufschlagt, sodass eine Fluktuation der Position der Intensitätsverteilung des Beleuchtungslichts um die Nominalposition bewirkt wird, wobei das Zufallssignal bevorzugt derart konditioniert ist, dass eine gewünschte Fluktuation, das heißt, eine Fluktuation mit eingestellten statistischen Eigenschaften, der Position der Intensitätsverteilung des Beleuchtungslichts um die Nominalposition bewirkt wird. Die Konditionierung des Zufallssignals kann einen anderweitig eingeführten Jitter berücksichtigen, wobei die betreffenden Regelparameter sowohl die Regelparameter einer Grundeinstellung der Strahlpositioniereinrichtung als auch gezielt eingestellte Regelparameter sein können.

Das Zufallssignal kann insbesondere unter Verwendung eines analogen oder digitalen Signalgenerators erzeugt werden, wodurch Zufallssignale mit wohldefinierten statistischen Eigenschaften, insbesondere mit vorgegebenen oder vorgebbaren Ortsverteilungen, erzeugt werden können. Dabei weist die Ortsverteilung bevorzugt zumindest in den für die Lokalisierung der Emitter betrachteten Raumrichtungen keine Vorzugsrichtung auf, sodass die Einführung systematischer Fehler bei der Lokalisierung vermieden wird. Insbesondere ist die Ortsverteilung bevorzugt rotationssymmetrisch bezüglich einer Achse, die die Nominalposition enthält. Diese Achse kann insbesondere die optische Achse eines Mikroskopobjektivs sein, mit dem die Intensitätsverteilung des Beleuchtungslichts in der Probe ausgebildet wird.

Die Ortsverteilung kann um die Nominalposition normalverteilt oder zumindest angenähert normalverteilt sein. In diesem Fall wird mit der Intensitätsverteilung insbesondere die unmittelbare Nachbarschaft der Nominalposition in der Probe überstrichen, während Positionen mit größerem Abstand von der Nominalposition seltener erreicht werden. Dies kann im Hinblick auf den Informationsgehalt detektierter Photonen im Hinblick auf die Position des zu lokalisierenden Emitters günstig sein, weil der Informationsgehalt der detektierten Photonen, wenn keine Hintergrundphotonen die Messung beeinflussen, umso höher ist, je dichter der Emitter sich bei seiner Anregung am Minimum der Intensitätsverteilung des Beleuchtungslichts befindet.

Die Ortsverteilung kann auch eine homogene Verteilung sein oder eine Ortsverteilung, die eine gegenüber der Normalverteilung inverse Wahrscheinlichkeitsamplitude aufweist. Beispielsweise kann die Ortsverteilung eine Top-Hat-Verteilung sein oder eine ringförmige Ortsverteilung mit einem zentralen Minimum und einem Maximalwert in einem definierten Abstand von der Nominalposition. In diesen Ausführungsformen ist die Nominalposition dann nicht mehr notwendigerweise der Ort der höchsten Aufenthaltswahrscheinlichkeit. Solche Verteilungen können insbesondere im Hinblick auf das Verfolgen eines Emitters vorteilhaft sein.

Eine besonders bevorzugte Ausführungsform des Verfahrens ist dadurch gekennzeichnet, dass aus den den Emissionen zugeordneten Lagen der Intensitätsverteilung eine Position des Emitters geschätzt wird. Dies kann beispielsweise in aus dem Stand der Technik bekannter Weise mit einem Positionsschätzer, z. B. einem *Least-Mean-Squares-Schätzer* oder einem *Maximum-*Likelihood-Schätzer erfolgen. Beispielsweise kann ein Schätzer einer Vektorsumme entsprechen oder aus einer Vektorsumme abgeleitet werden. Grundsätzlich geeignete Schätzer sind aus dem Stand der Technik, beispielsweise aus der europäischen Patentoffenlegungsschrift EP 3 951 470 A1, bekannt.

Wie weiter oben schon angegeben, können insbesondere bei bevorzugten Ausführungsformen, bei denen ein iteratives MINFLUX-Verfahren umgesetzt wird, insbesondere bei denen die Nominalposition nach der Schätzung der Lage des Emitters aktualisiert wird, hier oberhalb angegebene Eigenschaften der Fluktuation von Messzyklus zu Messzyklus angepasst werden. Beispielsweise kann ein erster Messzyklus unter Verwendung einer homogenen oder einer ringförmigen Ortsverteilung der Fluktuation der Position des Beleuchtungslichts um eine Nominalposition in der Probe durchgeführt werden, wobei die Fluktuation durch das Anlegen von Zufallssignalen an einen Steuereingang oder an Steuereingänge der Strahlpositioniereinrichtung hervorgerufen wird, während in einem folgenden oder mehreren folgenden Messzyklen die Fluktuation jeweils durch einen regelungsbasierten Jitter oder einen angeregten Jitter, beispielsweise wobei zwischen Messzyklen Regelparameter der Strahlpositioniereinrichtung angepasst werden, hervorgerufen wird, und während in zum Beispiel einem letzten Messzyklus ein inhärenter Jitter eines mechanischen Strahlscanners, der die Strahlpositioniereinrichtung ausbildet oder der in der Strahlpositioniereinrichtung enthalten ist, die Fluktuation der Position des Beleuchtungslichts hervorruft.

Ein zweiter Aspekt der Erfindung betrifft ein MINFLUX-Mikroskop oder ein STED-MINFLUX-Mikroskop für die Lokalisierung oder das Verfolgen eines vereinzelten Emitters in einer Probe. Das Mikroskop weist eine Mikroskop-Steuerungseinrichtung auf. Die Mikroskop-Steuerungseinrichtung kann insbesondere derart eingerichtet sein, dass das Lokalisieren oder das Verfolgen nach einem der zuvor beschriebenen Verfahren ausführbar ist oder ausgeführt wird. Das MINFLUX-Mikroskop oder das STED-MINFLUX-Mikroskop umfasst eine Lichtquelle, die dazu ausgebildet ist, ein Beleuchtungslicht bereitzustellen, und eine Beleuchtungsoptik, die dazu ausgebildet ist, die Probe in einem Nahbereich des vereinzelten Emitters mit einer ein lokales Intensitätsminimum aufweisenden Intensitätsverteilung des Beleuchtungslichts zu beaufschlagen.

Das Beleuchtungslicht kann dabei Anregungslicht sein, das eine Emission des Emitters anregt. Das Beleuchtungslicht kann aber auch Emissionsunterdrückungslicht (insbesondere STED-Licht) sein, das die Emission des Emitters in Abhängigkeit von seiner Intensität reduziert. In diesem Fall umfasst das MINFLUX-Mikroskop eine weitere Lichtquelle, die ein Anregungslicht bereitstellt, das den Emitter zur Emission anregt und das in der Probe mit der Intensitätsverteilung des Beleuchtungslichts überlagert wird, insgesamt also zumindest zwei Lichtquellen. Das MINFLUX-Mikroskop kann auch eine primäre Lichtquelle, insbesondere eine primäre Laserlichtquelle, und eine Vorrichtung, mittels der aus primärem Licht sowohl Anregungslicht als auch Emissionsunterdrückungslicht, insbesondere STED-Licht, erzeugt wird, aufweisen. Dieser und entsprechende ähnliche Fälle werden als Fälle aufgefasst, in denen das MINFLUX-Mikroskop zumindest zwei Lichtquellen aufweist.

Die Beleuchtungsoptik umfasst zumindest ein Mikroskopobjektiv, mit dem das Beleuchtungslicht in die Probe fokussiert wird, sowie einen Wellenfrontmodulator, mit dem die Wellenfront des Beleuchtungslichts moduliert wird, sodass bei dessen Fokussierung ein zentrales Intensitätsminimum mit in mindestens einer Richtung beiderseits angrenzenden Intensitätsanstiegsbereichen resultiert. Als Wellenfrontmodulatoren können beispielsweise Phasenplatten mit einer über einen Strahlquerschnitt variierenden festen Phasenverzögerung oder einstellbare Wellenfrontmodulatoren, insbesondere programmierbare Wellenfrontmodulatoren (*Spatial Light Modulator,* SLM) wie zum Beispiel auf Flüssigkristallen basierende, programmierbare Amplitudenmodulatoren und insbesondere auf Flüssigkristallen basierende, programmierbare Phasenmodulatoren, eingesetzt werden. Entsprechende Wellenfrontmodulatoren sind dem Fachmann aus dem Stand der Technik zur STED-Mikroskopie oder der MINFLUX-Mikroskopie bekannt.

Das erfindungsgemäße Mikroskop umfasst in dem Strahlengang des Beleuchtungslichts weiter eine Strahlpositionierungsvorrichtung, die dazu ausgebildet ist, die Intensitätsverteilung des Beleuchtungslichts in der Probe zu verlagern. Dabei muss die Strahlpositionierungsvorrichtung nicht dezidiert für die Durchführung des erfindungsgemäßen Verfahrens vorgesehen sein; es kann sich auch um eine im Mikroskop vorhandene, für andere Zwecke vorgesehene Vorrichtung handeln. Insbesondere kann die Strahlpositionierungsvorrichtung Teil eines Strahlscanners zur Bildaufnahme mittels Rasterscanning sein.

In einer bevorzugten Ausführungsform umfasst die Strahlpositionierungsvorrichtung einen Strahlscanner, weiter bevorzugt insbesondere einen Galvoscanner. In einer weiter bevorzugten Ausführungsform umfasst die Strahlpositionierungsvorrichtung ein Galvoscanner-System mit mehreren Galvoscannern. In weiter bevorzugten Ausführungsformen weisen die Galvoscanner des Galvoscanners-Systems jeweils ein integriertes Winkellagemesssystem, insbesondere einen integrierten Encoder, beispielsweise einen Rotationsencoder, auf.

Das erfindungsgemäße Mikroskop weist eine Messvorrichtung zur Erfassung von Messdaten auf, aus denen eine aktuelle Position der Intensitätsverteilung des Beleuchtungslichts in der Probe bestimmbar ist. Hierbei kann eine aktuelle Position der Intensitätsverteilung zu einem einzelnen Messdatum oder zu einem Satz mehrerer Messdaten gehören. Bevorzugt ist die Messvorrichtung eingerichtet, Messdaten zu erfassen, aus denen die Position der Intensitätsverteilung des Beleuchtungslichts in der Probe mit einer Unsicherheit von höchstens 10 nm, bevorzugt von höchstens 5 nm, weiter bevorzugt von höchstens 2 nm und besonders bevorzugt von höchstens 1 nm bestimmbar ist.

In einer bevorzugten Ausführungsform weist das erfindungsgemäße Mikroskop eine Positionsbestimmungseinheit auf, die eingerichtet ist, aus den Messdaten oder den Sätzen von Messdaten jeweils aktuelle Positionen der Intensitätsverteilung des Beleuchtungslichts zu bestimmen, weiter bevorzugt, die jeweils aktuelle Position der Intensitätsverteilung des Beleuchtungslichts in der Probe mit einer Unsicherheit von höchstens 10 nm, bevorzugt von höchstens 5 nm, weiter bevorzugt von höchstens 2 nm und besonders bevorzugt von höchstens 1 nm zu bestimmen.

In weiter bevorzugten Ausführungsformen sind die integrierten Winkellagemesssysteme der Galvoscanner der Strahlpositionierungsvorrichtung Elemente der Messvorrichtung zur Erfassung von Messdaten, aus denen eine aktuelle Position der Intensitätsverteilung des Beleuchtungslichts in der Probe bestimmbar ist, das heißt, die Winkellagemesssysteme werden nicht nur zur Regelung der jeweiligen Galvoscanner genutzt, sondern die aktuellen Winkellageinformationen werden jeweils als Messwert derart ausgeben oder übergegeben, dass sie als Basis für die Bestimmung der jeweiligen aktuellen Position des Beleuchtungslichts in der Probe dienen. Bevorzugt werden die aktuellen Winkellageinformationen einem Zeitpunkt der Erfassung der Winkellageinformation zugeordnet. Die Zuordnung zu einem Zeitpunkt kann dabei beispielsweise erfolgen, indem die Winkellageinformationen in Register geschrieben werden, wobei zu benachbarten Einträgen ein festes, kurzes Zeitintervall gehört.

In einer besonders bevorzugten Ausführungsform weist die Messvorrichtung zur Erfassung von Messdaten, aus denen eine aktuelle Position der Intensitätsverteilung des Beleuchtungslichts in der Probe bestimmbar ist, eine Einrichtung zur Erzeugung eines Hilfslichtstrahls auf, der derart in einen Strahlengang des Beleuchtungslichts eingekoppelt wird, dass der Hilfslichtstrahl derart über alle Komponenten des Strahlscanners, die im Zusammenwirken die Fluktuation der Position der Intensitätsverteilung in der Probe verursachen, geführt wird, dass der Hilfslichtstrahl jeweils eine mit der Ablenkung des Beleuchtungslichtstrahls identische Ablenkung erfährt, und eine Messvorrichtung, mit der die Ablenkung des Hilfslichtstrahls messtechnisch erfasst wird.

Die Einkopplung des Hilfslichtstrahls in den Strahlengang des Beleuchtungslichtstrahls kann dabei durch ein Einleiten des Hilfslichtstrahls einerseits der betreffenden Komponenten des Strahlscanners unter einem flachen Winkel in den Strahlengang des Beleuchtungslichtstrahls derart in den Strahlengang des Beleuchtungslichtstrahls, dass der Hilfslichtstrahl von allen betreffenden Komponenten des Strahlscanners in derselben Weise abgelenkt wird wie der Beleuchtungslichtstrahl, und andererseits dieser Komponenten unter einem flachen Winkel ausgeleitet wird. In dieser Ausführungsform kann das Hilfslicht gleichzeitig sowohl in der Wellenlänge als auch in der Polarisation mit dem Beleuchtungslicht oder dem weiteren Licht übereinstimmen. Es kann daher Licht der Beleuchtungslichtquelle oder, wenn das Beleuchtungslicht ein Emissionsunterdrückungslicht ist, der weiteren Lichtquelle sein.

Weiter bevorzugt weist die Messvorrichtung zur Erfassung von Messdaten, aus denen eine aktuelle Position der Intensitätsverteilung des Beleuchtungslichts in der Probe bestimmbar ist, eine separate Hilfslichtquelle auf, die einen Hilfslichtstrahl erzeugt, der gut von dem Beleuchtungslichtstrahl und, wenn das Beleuchtungslicht Emissionsunterdrückungslicht ist, von Anregungslicht trennbar ist und weiter bevorzugt auch gut von der Emission der vereinzelten Emitter trennbar ist, insbesondere einen Hilfslichtstrahl in einem separaten Wellenlängenbereich. Wenn ein solcher abtrennbarer Hilfslichtstrahl genutzt wird, kann das Mikroskop in bevorzugten Ausführungsformen einen Strahlteiler einerseits der betreffenden Komponenten des Strahlscanners zur Einkopplung des Hilfslichtstrahls in den Strahlengang des Beleuchtungslichtstrahls und andererseits dieser Komponenten einen weiteren Strahlteiler zur Auskopplung des Hilfslichtstrahls aus dem Strahlengang des Beleuchtungslichtstrahls aufweisen.

In einer alternativen Ausführungsform weist die Messvorrichtung zur Erfassung von Messdaten, aus denen eine aktuelle Position der Intensitätsverteilung des Beleuchtungslichts in der Probe bestimmbar ist, im Strahlengang des Beleuchtungslichts nach allen Komponenten des Strahlscanners, die im Zusammenwirken die Fluktuation der Position der Intensitätsverteilung in der Probe verursachen, einen Strahlteiler auf, mit dem ein Anteil des von einer Beleuchtungslichtquelle ausgehenden Lichtstrahls als Hilfslichtstrahl aus dem Strahlengang des Beleuchtungslichts ausgekoppelt wird.

Die Messvorrichtung zur Erfassung von Messdaten, aus denen eine aktuelle Position der Intensitätsverteilung des Beleuchtungslichts in der Probe bestimmbar ist, weist bei diesen alternativen Ausführungsformen weiter eine Einrichtung auf, mit der die Ablenkung des Hilfslichtstrahls erfasst wird. Diese Einrichtung weist insbesondere einen oder mehrere positionsempfindliche Lichtdetektoren, beispielsweise eine oder mehrere positionsempfindliche Fotodioden (*position sensitive device,* PSD) oder einen oder mehrere pixelierte Zeilen- oder Flächendetektoren, z. B. eine CCD-Kamera. Bevorzugt weist die Einrichtung weitere optische Elemente auf, mit denen der Hilfslichtstrahl oder ein Teil des Hilfslichtstrahls auf den oder die positionsempfindlichen Detektoren fokussiert wird oder vor dem Auftreffen auf den oder die positionsempfindlichen Detektoren kollimiert wird. Bevorzugt weist die Messvorrichtung zur Erfassung von Messdaten, aus denen eine aktuelle Position der Intensitätsverteilung des Beleuchtungslichts in der Probe bestimmbar ist, im Strahlengang des Hilfslichtstrahls nach dem Auskoppeln aus dem Beleuchtungslichtstrahl einen Strahlteiler auf. Der Strahlteiler ermöglicht, dass das Erfassen der Ablenkung des Hilfslichtstrahls ein Erfassen einer Verlagerung des Hilfslichtstrahls in einer Zwischenbildebene des Mikroskops und ein Erfassen einer Verkippung des Hilfslichtstrahls in einer Zwischenbildebene des Mikroskops bzgl. einer optischen Achse umfasst.

Eine Messvorrichtung zur Erfassung von Messdaten, aus denen eine aktuelle Position der Intensitätsverteilung des Beleuchtungslichts in der Probe bestimmbar ist, kann sowohl eine Einrichtung zur Erzeugung eines Hilfslichtstrahls, der derart in einen Strahlengang des Beleuchtungslichts eingekoppelt wird, dass der Hilfslichtstrahl derart über alle Komponenten des Strahlscanners, die im Zusammenwirken die Fluktuation der Position der Intensitätsverteilung in der Probe verursachen, geführt wird, dass der Hilfslichtstrahl jeweils eine mit der Ablenkung des Beleuchtungslichtstrahls identische Ablenkung erfährt, und eine Messvorrichtung, mit der die Ablenkung des Hilfslichtstrahls messtechnisch erfasst wird, aufweisen, als auch weitere Einrichtungen, zum Beispiel solche, mit denen Einstellungen einzelner Elemente des Strahlscanners gemessen werden, wie zum Beispiel integrierte Winkellagemesssysteme, insbesondere solche, wie weiter oben beschrieben. Ganz allgemein schließt das Vorhandensein einer der genannten Messvorrichtungen zur Erfassung von Messdaten nicht aus, dass zusätzlich andere der genannten Messvorrichtungen zur Erfassung von Messdaten im Mikroskop vorhanden sind. Sind verschiedenartige Messvorrichtungen vorhanden, können diese eine gemeinsame Messvorrichtung bilden. Dies gilt auch dann, wenn mehrere Messvorrichtungen einander entsprechende Informationen liefern, sodass redundante Informationen vorliegen. Diese Redundanz kann dann beispielsweise zur Verringerung der Unsicherheit der Bestimmung der Position der Intensitätsverteilung des Beleuchtungslichts in der Probe genutzt werden oder aber zur Erkennung von Fehlverhalten des Mikroskops, wenn die Messdaten nicht konsistent sind.

Das erfindungsgemäße Mikroskop umfasst weiterhin eine Detektionsvorrichtung, die dazu ausgebildet ist, Emissionen des Emitters zu detektieren.

Die Mikroskop-Steuerungseinrichtung ist dazu eingerichtet, zu einer jeweiligen detektierten Emission die jeweilige aktuelle Position der Intensitätsverteilung des Beleuchtungslichts in der Probe und/oder die jeweiligen Messdaten zu registrieren. Dass zu detektierten Emissionen Messdaten registriert werden, bedeutet, dass die detektierten Emissionen den jeweiligen aktuellen Positionen der Intensitätsverteilung des Beleuchtungslichts in der Probe zuordenbar oder zugeordnet sind. Dass die Emissionen den aktuellen Positionen zuordenbar sind, kann insbesondere dadurch erreicht werden, dass einerseits die Detektionseinrichtung jede detektierte Emission zeitaufgelöst erfasst und dass andererseits die Messvorrichtung, die die Messdaten erfasst, aus denen eine aktuelle Position der Intensitätsverteilung des Beleuchtungslichts in der Probe bestimmbar ist, die Messdaten zeitaufgelöst erfasst. Dass zu detektierten Emissionen Messdaten registriert werden, kann insbesondere bedeuten, dass die betreffenden Werte einander direkt oder indirekt, beispielsweise über eine gemeinsame Zeitkoordinate, zugeordnet gespeichert werden. Sowohl Komponenten der Detektionsvorrichtung als auch der Messvorrichtung können integrale Bestandteile der Mikroskop-Steuerungseinrichtung sein.

In einer bevorzugten Ausführungsform ist die Mikroskop-Steuerungseinrichtung ausgebildet, dass die mit der Detektionsvorrichtung detektierten Emissionen den jeweiligen aktuellen Positionen der Intensitätsverteilung des Beleuchtungslichts in der Probe zugeordnet werden, weiter bevorzugt, dass die mit der Detektionsvorrichtung detektierten Emissionen laufend während der Durchführung von Messungen den jeweiligen aktuellen Positionen der Intensitätsverteilung des Beleuchtungslichts in der Probe zugeordnet werden.

Bevorzugt ist die Detektionsvorrichtung dazu ausgebildet, einzelne Emissionsereignisse zu erfassen, bevorzugt, einzelne Photonen zu erfassen, und ist die Mikroskop-Steuerungseinrichtung dazu ausgebildet, die detektierten einzelnen Emissionsereignisse einem Zeitpunkt der Erfassung zuzuordnen.

In einer besonders bevorzugten Ausführungsform umfasst das MINFLUX-Mikroskop einen Signalgenerator zur Erzeugung eines Zufallssignals, sowie einen Steuereingang für die Strahlpositionierungsvorrichtung, der mit dem Zufallssignal des Signalgenerators beaufschlagt wird. Besonders bevorzugt ist die Ausführung des Signalgenerators als digitaler Signalgenerator, der Zufallssignale mit wohldefinierten statistischen Eigenschaften, insbesondere mit vorgegebenen oder vorgebbaren Ortsverteilungen, erzeugt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und/oder Merkmalskombinationen der Erfindung sind lediglich beispielhaft und können alternativ oder kumulativ zur Wirkung kommen. Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen.

Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### Kurzbeschreibung der Figuren

Fig. 1 zeigt eine Lagefluktuation der Intensitätsverteilung.
Fig. 2 zeigt eine bevorzugte Lagefluktuation der Intensitätsverteilung.
Fig. 3 zeigt ein erfindungsgemäßes MINFLUX-Mikroskop.
Fig. 4 zeigt ein alternatives, erfindungsgemäßes MINFLUX-Mikroskop.

### Beschreibung der Figuren

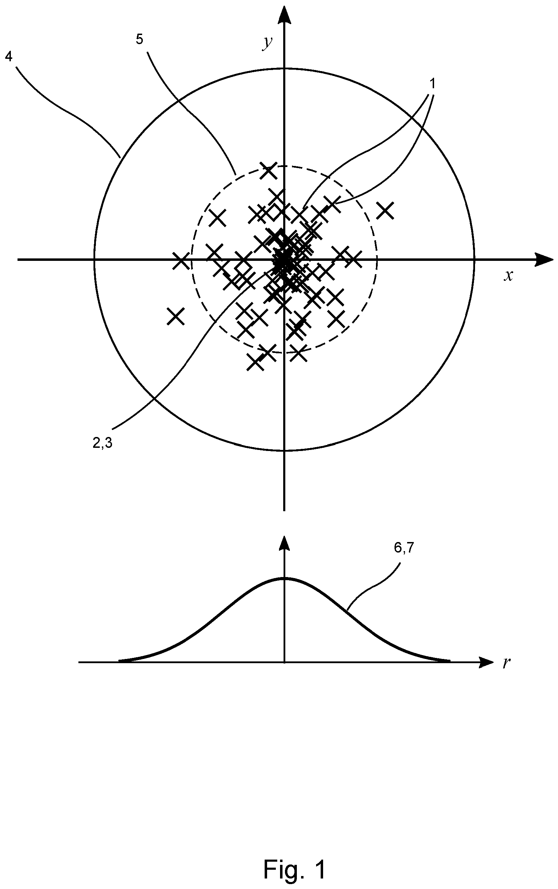

**Fig. 1** zeigt eine Fluktuation der Position der Intensitätsverteilung des Beleuchtungslichts 12 in der Probe 14, wie sie für das erfindungsgemäße Verfahren angewendet werden kann. Der Scatterplot zeigt die Momentanpositionen, das heißt die jeweils aktuellen Positionen 1, der Intensitätsverteilung, wobei jeder Punkt eine Momentanposition, das heißt jeweils eine aktuelle Position 1, der Intensitätsverteilung einer äquidistant gesampelten Zeitreihe darstellt. Für die ein zentrales Minimum aufweisende Intensitätsverteilung des Beleuchtungslichts 12 ist die aktuelle Position 1 insbesondere die aktuelle Position 1 des zentralen Minimums der Intensitätsverteilung. Dabei liegt die Mehrheit der aktuellen Positionen innerhalb des Innenbereichs 5 um die Nominalposition 2 (die der vermuten Lage des zu lokalisierenden Emitters 8 entspricht), wobei die Abmessung des Innenbereichs 5 gemäß der in der MINFLUX-Mikroskopie üblichen Dimensionen für die Abtastung, beispielsweise im Bereich zwischen 30 nm und 300 nm, liegt.

Der dargestellte Scatterplot entspricht der unter dem Scatterplot dargestellten radialen Ortsverteilungsfunktion 6, gemäß der die aktuellen Positionen 1 normalverteilt und rotationssymmetrisch um die am Koordinatenursprung 3 lokalisierte Nominalposition 2 liegen, das heißt, die radiale Ortsverteilungsfunktion 6 entspricht einer Normalverteilung 7. Eine solche Verteilung kann sich in guter Näherung beispielsweise aus einem inhärenten, insbesondere regelungsbasierten, Jitter eines Galvoscanner-Systems 32 ergeben.

Die Größe des Innenbereichs 5 kann beispielsweise durch eine entsprechende Wahl von Regelparametern eines Galvoscanner-Systems 32 bestimmt sein. Die Größe des Innenbereichs 5 und die Regelparameter können so bestimmt sein, dass sich im Mittel einer Messdauer ein fester Anteil aller aktuellen Positionen 1, beispielsweise ein Anteil von 95 %, innerhalb des Innenbereichs 5 befindet. Im gezeigten Beispiel befinden sich alle aktuellen Positionen 1 innerhalb des Nahbereichs 4. Dies muss aber nicht in allen Ausführungsformen der Fall sein. Insbesondere wenn der Innenbereich 5 groß gewählt wird, können sich aktuelle Positionen 1 auch außerhalb des Nahbereichs 4 befinden. Die an den außerhalb liegenden aktuellen Positionen 1 registrierten Emissionen können dann bei der Lokalisation des Emitters 8 unberücksichtigt bleiben oder gesondert, beispielsweise im Hinblick auf die Bestimmung eines Hintergrunds, ausgewertet und entsprechend bei der Lokalisation des Emitters 8 berücksichtigt werden.

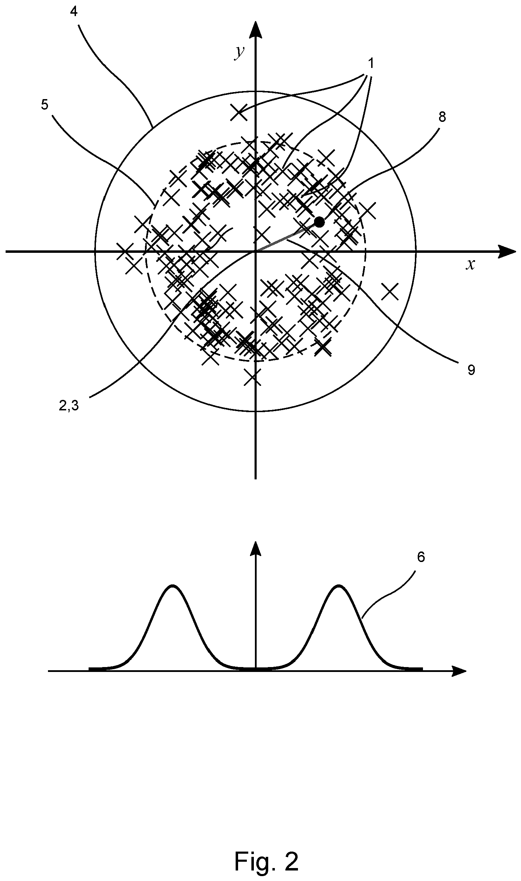

**Fig. 2** zeigt eine alternative bevorzugte Fluktuation der Position der Intensitätsverteilung des Beleuchtungslichts 12 in der Probe 14. Wie der Scatterplot der aktuellen Positionen 1 der Intensitätsverteilung zeigt, ist hier die Dichte der Punkte im Zentrum gering und nimmt mit steigendem Radius bis zu einem Maximalwert zu, um mit weiter steigendem Radius wieder abzufallen. In der Figur 2 ist der Emitter 8 eingezeichnet, dessen Lage im gezeigten Beispiel einen vergleichsweise großen Abstand 9 zu der Nominalposition 2, die der vor Durchführung des erfindungsgemäßen Verfahrens vermuteten Lage des Emitters 8 entspricht, aufweist; der Abstand 9 ist in Fig. 2 mittels einer Verbindungslinie von der Nominalposition 2, die dem Koordinatenursprung 3 entspricht zum Emitter 8 gekennzeichnet. Die Fluktuation der Position der Intensitätsverteilung des Beleuchtungslichts 12 um eine Nominalposition 2 in der Probe 14 gemäß einer solchen Verteilung bietet den Vorteil, dass mit großer Sicherheit die Menge der aktuellen Positionen 1, die zur Abtastung des Emitters 8 genutzt werden, eine für eine Lokalisation ausreichende Anzahl von Positionen in jeder Raumrichtung der Abtastung beiderseits des Emitters 8 umfasst. Eine solche Verteilung der aktuellen Positionen 1 ist insbesondere dann günstig, wenn die vermutete Lage des Emitters 8 eine hohe Unsicherheit aufweist.

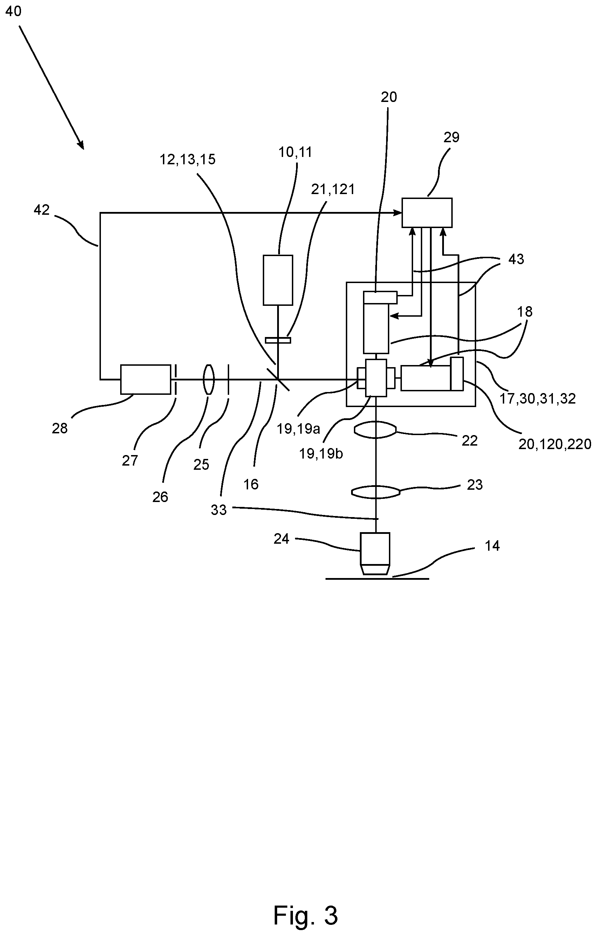

**Fig. 3** zeigt ein erfindungsgemäßes MINFLUX-Mikroskop 40, das auf einem konventionellen konfokalen Laserscanning-Mikroskop aufbaut. Das MINFLUX-Mikroskop 40 umfasst eine üblicherweise als Laser 10 ausgebildete Lichtquelle 11, die Beleuchtungslicht 12 emittiert, das hier Anregungslicht 13 für in der Probe 14 enthaltene, vereinzelte Emitter 8 ist. Der Beleuchtungslichtstrahl 15 wird mit einem Strahlteiler 16 in eine Lichtverlagerungseinheit 30, die hier als Strahlscanner 31, konkret als Galvoscanner-System 32 ausgeführt ist, gelenkt, die eine Ablenkung des Beleuchtungslichtstrahls 15 in zwei Raumrichtungen ermöglicht. Dazu umfasst das Galvoscanner-System 32 zwei jeweils auf einem Galvomotor 18 montierte Kippspiegel 19, deren Drehachsen senkrecht zueinander stehen, also zwei Galvoscanner, die den Beleuchtungslichtstrahl 15 in senkrecht zueinander orientierten Raumrichtungen ablenken. Die Ansteuerung der Galvomotoren 18 zum Abrastern der Probe 14 mit dem Beleuchtungslicht 12 erfolgt über einen in die Mikroskop-Steuerungseinrichtung 29 integrierten Scancontroller. Die den Kippspiegeln 19 zugeordneten Galvomotoren 18 der Galvoscanner umfassen integrierte Winkellagemesssysteme 20, hier konkret Encoder 120, die als Rotationsencoder 220 ausgeführt sein können, mit denen die Winkelposition der Galvomotoren 18 und damit der Kippspiegel 19 bestimmt wird. Die Kippspiegel 19 sind in dem gezeigten Beispiel jeweils nahe einer Pupille, das heißt nahe einer Ebene, die zu der rückwärtigen Pupille des Objektivs 24 konjugiert ist, platziert. In einer alternativen, in der Figur nicht dargestellten Anordnung, kann sich zwischen beiden Scannern eine Relayoptik befinden, wobei dann sowohl der Kippspiegel 19a als auch der Kippspiegel 19b bevorzugt jeweils in einer Pupille platziert werden.

Das aus dem Galvoscanner-System 32 austretende Beleuchtungslicht 12 wird über ein eine Scanlinse 22 und eine Tubuslinse 23 umfassendes Abbildungssystem in die rückwärtige Pupille des Objektivs 24 abgebildet, das das Beleuchtungslicht 12 in die Probe 14 fokussiert. Eine Winkeländerung der Kippspiegel 19 übersetzt sich in eine Winkeländerung des Beleuchtungslichtstrahls 15 in der Pupille des Objektivs 24 und damit in eine Verlagerung des fokussierten Beleuchtungslichts 12 in der Probe 14.

Das von den Emittern 8 in der Probe 14 emittierte Licht 33 wird durch das Objektiv 24 eingesammelt und läuft in der Richtung des Beleuchtungslichtstrahls 15 entgegengesetzter Richtung bis zum Strahlteiler 16, der das emittierte Licht 33 des Emitters 8 transmittiert und damit vom Beleuchtungslicht 12 abtrennt. Der Strahlteiler 16 kann insbesondere als (dichroitischer) Farbteiler ausgeführt sein. Das hinter dem Strahlteiler 16 angeordnete Detektionssystem umfasst einen Filter 25, der unerwünschte Streulichtanteile blockt, und eine Linse 26, mit der das von den Emittern 8 emittierte Licht 33 durch eine (konfokale) Lochblende 27 auf den Detektor 28 fokussiert wird.

Das MINFLUX-Mikroskop 40 unterscheidet sich von einem konventionellen Konfokalmikroskop einerseits dadurch, dass im Beleuchtungslichtstrahl 15 zusätzlich ein Wellenfrontmodulator 21, im konkret dargestellten Beispiel eine Phasenplatte 121, angeordnet ist, der die Wellenfront des Beleuchtungslichtstrahls 15 räumlich so moduliert, dass das Beleuchtungslicht 12 bei der Fokussierung mit dem Objektiv 24 in der Probe 14 eine Intensitätsverteilung mit einem von Anstiegsbereichen umgebenen, zentralen Minimum ausbildet.

Das dargestellte MINFLUX-Mikroskop 40 unterscheidet sich von einem konventionellen Konfokalmikroskop weiter dadurch, dass das Mikroskop eine Mikroskop-Steuerungseinrichtung 29 umfasst, die jeder mit dem Detektor 28 registrierten Emission die jeweils aktuelle Winkelstellung der Kippspiegel 19 zuordnet. Hierzu empfängt die Mikroskop-Steuerungseinrichtung 29 einerseits das Detektorsignal 42 des Detektors 28 und andererseits die von den Encodern 20 ausgegebenen Positionssignale 43 der Galvomotoren 18. Somit bilden bei dieser Ausführungsform die Encoder 20 in Verbindung mit der Mikroskop-Steuerungseinrichtung 29 eine Messvorrichtung zur Erfassung von Messdaten, aus denen jeweils eine aktuelle Position 1 der Intensitätsverteilung des Beleuchtungslichts 12 in der Probe 14 bestimmbar ist.

Für die Durchführung des erfindungsgemäßen Verfahrens mit dem dargestellten MINFLUX-Mikroskop 40 wird ausgenutzt, dass die Galvoscanner des Galvoscanner-Systems 32, und somit das Galvoscannersystem 32 insgesamt, einen inhärenten, beispielsweise regelungsbasierten, Jitter aufweisen, d. h. kleine, zufällige Drehbewegungen ausführen, die sich in eine Fluktuation der Position der Intensitätsverteilung des Beleuchtungslichts 12 in der Probe 14 übersetzen, sodass die Intensitätsverteilung des Beleuchtungslicht 12 in einem Nahbereich 4 um die Nominalposition 2 insbesondere einen Innenbereich 5 um die Nominalposition 2 der Intensitätsverteilung in der Probe 14 überstreicht.

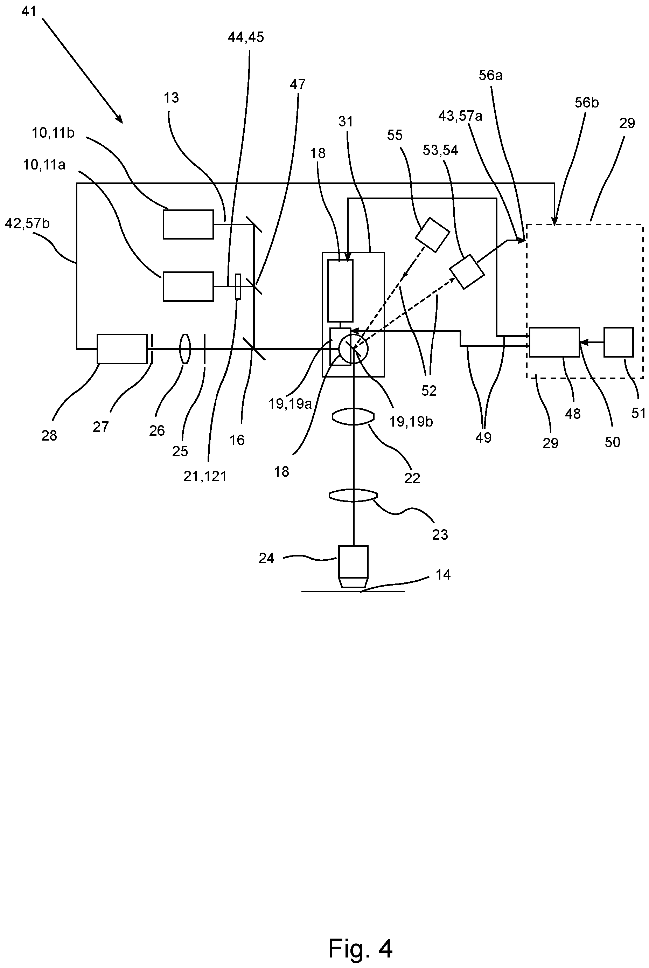

In **Fig. 4** ist eine weitere Ausführungsform eines erfindungsgemäßen Mikroskops dargestellt. Das Mikroskop ist als STED-MINFLUX-Mikroskop 41 ausgebildet. Das STED-MINFLUX-Mikroskop 41 umfasst eine als Laser 10 ausgeführte erste Lichtquelle 11a für Beleuchtungslicht 12, das hier Emissionsunterdrückungslicht 44, konkret STED-Licht 45, ist. Das Mikroskop umfasst weiterhin eine ebenfalls als Laser 10 ausgeführte zweite Lichtquelle 11b für Anregungslicht 13. Im Strahlengang des Emissionsunterdrückungslichts 44 ist ein als Phasenplatte 121 ausgebildeter Wellenfrontmodulator 21 angeordnet, der die Wellenfront des Emissionsunterdrückungslichts 44 phasenmoduliert, sodass bei der Fokussierung des Emissionsunterdrückungslichts 44 durch das Objektiv 24 eine Intensitätsverteilung mit einem von Anstiegsbereichen umgebenen, zentralen Minimum resultiert.

Das Anregungslicht 13 und das Emissionsunterdrückungslicht 44 werden mit einem Strahlvereiniger 47 zusammengeführt und mit einem Strahlteiler 16 auf ein Galvoscanner-System 31 gerichtet. Das Galvoscanner-System 31 umfasst wiederum zwei durch Galvomotoren 18 angetriebene Kippspiegel 19. Die Galvomotoren 18 werden durch einen Scancontroller 48 angesteuert, der Stellsignale 49 für die Galvomotoren 18 erzeugt. Der Scancontroller 48 weist einen Steuereingang 50 auf, der mit dem Ausgangssignal eines Signalgenerators 51 beaufschlagt wird. Der Signalgenerator 51 ist dazu eingerichtet, ein (kleines) Zufallssignal zu erzeugen, um eine Fluktuation der Kippspiegel 19 derart einzuführen, dass die Position der Intensitätsverteilung um die Nominalposition 2 fluktuiert; dies kann erreicht werden, indem das Zufallssignal derart ist, dass es eine Fluktuation der Kippspiegel 19 um eine der Nominalposition 2 zugeordnete Nennlage verursacht. Das Zufallssignal weist dabei bevorzugt wohldefinierte statistische Eigenschaften auf, insbesondere eine vorgegebene oder vorgebbare Ortsverteilung.

Der auf den ersten Kippspiegel 19a einfallende Lichtstrahl wird von diesem auf den zweiten Kippspiegel 19b umgelenkt. Der zweite Kippspiegel 19b, dessen Achse senkrecht zur Achse des ersten Kippspiegels 19a und senkrecht zu der Richtung des auf ihn in einer Nullstellung des ersten Kippspiegels 19a einfallenden Lichtstrahls ist, lediglich aus Vereinfachungsgründen senkrecht zur Zeichenebene und nach rechts gegenüber dem ersten Kippspiegel 19a versetzt dargestellt, lenkt den einfallenden Lichtstrahl in Richtung einer Scanlinse 22 um. Der aus dem Galvoscanner-System 31 austretende Lichtstrahl wird über die Scanlinse 22 und eine Tubuslinse 23 in die rückwärtige Pupille des Objektivs 24 gerichtet und durch das Objektiv 24 in die Probe 14 fokussiert. Wie bei der in Fig. 3 gezeigten Ausführungsform des MINFLUX-Mikroskops 40 wird das von den Emittern 8 in der Probe 14 emittierte Licht 33 durch das Objektiv 24 eingesammelt, läuft in der Richtung der Anregungs- und Emissionsunterdrückungslichtstrahlen entgegengesetzter Richtung bis zum Strahlteiler 16, an dem es von dem Anregungslicht 13 und dem Emissionsunterdrückungslicht 44 abgetrennt wird. Das hinter dem Strahlteiler 16 angeordnete Detektionssystem umfasst einen Filter 25, der unerwünschte Streulichtanteile blockt, und eine Linse 26, mit der das von den Emittern 8 emittierte Licht 33 durch eine (konfokale) Lochblende 27 auf den Detektor 28 fokussiert wird.

In der gezeigten Ausführungsform umfassen die Galvomotoren 18 keine integrierten Winkellagemesssysteme 20 bzw. stellen ein Positionssignal 43 extern nicht bereit. Um die jeweils aktuelle Winkelposition der Kippspiegel 19 zu erfassen ist daher in der gezeigten Ausführungsform ein separates Winkellagemesssystem vorgesehen, von dem aus Gründen der Übersichtlichkeit lediglich die Komponenten zur Positionsmessung des Kippspiegels 19b gezeigt sind. Die Winkelmessung beruht auf der Ablenkung eines Hilfslichtstrahls 52 durch den jeweiligen zu überwachenden Kippspiegel 19 und einer Positionsmessung des Hilfslichtstrahls mit einem Hilfslichtdetektor 53, insbesondere mit einem positionsempfindlichen Detektor 54. Dazu wird der jeweils von einer Hilfslichtquelle 55 emittierte Hilfslichtstrahl 52 auf die Rückseite des jeweiligen Kippspiegels 19 gerichtet, dessen Auslenkung jeweils überwacht werden soll, und wird von diesem auf den korrespondierenden Hilfslichtdetektor 53 reflektiert. Jeder Hilfslichtdetektor 53 ist über eine erste Signalleitung 57a mit einem ersten Signaleingang 56a einer Mikroskop-Steuerungseinrichtung 29 verbunden. Die Mikroskop-Steuerungseinrichtung 29 empfängt die jeweiligen Positionssignale 43 der Hilfslichtdetektoren. Die Mikroskop-Steuerungseinrichtung 29 weist einen zweiten Signaleingang 56b auf. An diesen zweiten Signaleingang 56b ist eine zweite Signalleitung 57b angeschlossen, die den Detektor 28 mit der Mikroskop-Steuerungseinrichtung 29 verbindet. Die Mikroskop-Steuerungseinrichtung 29 empfängt über die zweite Signalleitung 57b die jeweiligen Detektorsignale 42. Sie ist dazu ausgebildet, jedem der mit dem Detektor 28 registrierten Emissionsereignisse die jeweiligen aktuellen Positionssignale 43 des Hilfslichtdetektors 53 bzw. der Hilfslichtdetektoren 53 zuzuordnen. Hierbei ist es auch möglich, dass allen oder einigen Emissionsereignissen je Hilfslichtdetektor 53, das heißt je Kippspiegel 19, eine Mehrzahl von Positionssignalen 43 zugeordnet wird. Dies ermöglicht, dass außer der aktuellen Position 1 der Intensitätsverteilung in der Probe 14 der jeweiligen detektierten Emissionen auch eine Unsicherheit, mit der die aktuelle Position 1 in der Probe bestimmt wurde, zugeordnet werden kann.

### Bezugszeichenliste

- 1: aktuelle Position
- 2: Nominalposition
- 3: Koordinatenursprung
- 4: Nahbereich
- 5: Innenbereich
- 6: radiale Ortsverteilungsfunktion
- 7: Normalverteilung
- 8: Emitter
- 9: Abstand
- 10: Laser
- 11: Lichtquelle
- 11a: erste Lichtquelle
- 11b: zweite Lichtquelle
- 12: Beleuchtungslicht
- 13: Anregungslicht
- 14: Probe
- 15: Beleuchtungslichtstrahl
- 16: Strahlteiler
- 17: Strahlpositionierungsvorrichtung
- 18: Galvomotor
- 19: Kippspiegel
- 19a: erster Kippspiegel
- 19b: zweiter Kippspiegel
- 20: integriertes Winkellagemesssystem
- 21: Wellenfrontmodulator
- 22: Scanlinse
- 23: Tubuslinse
- 24: Objektiv
- 25: Filter
- 26: Linse
- 27: Lochblende
- 28: Detektor
- 29: Mikroskop-Steuerungseinrichtung
- 30: Lichtverlagerungseinheit
- 31: Strahlscanner
- 32: Galvoscanner-System
- 33: emittiertes Licht
- 40: MINFLUX-Mikroskop
- 41: STED-MINFLUX-Mikroskop
- 42: Detektorsignal
- 43: Positionssignal
- 44: Emissionsunterdrückungslicht
- 45: STED-Licht
- 46: Umlenkspiegel
- 47: Strahlvereiniger
- 48: Scancontroller
- 49: Stellsignal
- 50: Steuereingang
- 51: Signalgenerator
- 52: Hilfslichtstrahl
- 53: Hilfslichtdetektor
- 54: positionsempfindlicher Detektor
- 55: Hilfslichtquelle
- 56a: erster Signaleingang
- 56b: zweiter Signaleingang
- 57a: erste Signalleitung
- 57b: zweite Signalleitung
- 120: Encoder
- 121: Phasenplatte
- 220: Rotationsencoder

## Patentansprüche

1. Verfahren für die Lokalisierung oder für das Verfolgen eines vereinzelten Emitters (8) mittels eines MINFLUX-Verfahrens oder eines STED-MINFLUX-Verfahrens in einer Probe (14),
- wobei die Probe (14) in einem Nahbereich (4) des vereinzelten Emitters (8) mit einer ein lokales Intensitätsminimum aufweisenden Intensitätsverteilung eines Beleuchtungslichts (12) beaufschlagt wird, wobei das Beleuchtungslicht (12) Anregungslicht (13) oder Emissionsunterdrückungslicht, insbesondere STED-Licht, ist, und wobei das Beleuchtungslicht (12) oder ein anderes Licht den Emitter (8) zur Emission von Licht anregt,
- wobei eine messtechnische Erfassung einer oder mehrerer Messgrößen erfolgt, aus der oder denen die jeweils aktuelle Position (1) der Intensitätsverteilung des Beleuchtungslichts (12) in der Probe (14) bestimmbar ist,
- wobei Emissionen des Emitters (8) detektiert werden,
**dadurch gekennzeichnet, dass** die Position der Intensitätsverteilung in der Probe (14) um eine Nominalposition (2) fluktuiert und dass die messtechnische Erfassung derart erfolgt, dass die jeweils aktuelle Position (1) der Intensitätsverteilung in der Probe (14) den detektierten Emissionen jeweils zuordenbar ist.

2. Verfahren nach Anspruch 1, **dadurch gekennzeichnet, dass** die Nominalposition (2) eine in einem vorhergehenden Lokalisierungsschritt bestimmte, vermutete Lage des Emitters (8) in der Probe (14) ist.

3. Verfahren nach Anspruch 1, **dadurch gekennzeichnet, dass** die Nominalposition (2) eine bekannte oder vorgegebene Bindungsstelle in der Probe (14) ist, an der eine mit dem Emitter (8) markierte Struktur gebunden ist oder binden kann.

4. Verfahren nach Anspruch einem der Ansprüche 1 bis 3, **dadurch gekennzeichnet, dass** die Fluktuation der Position der Intensitätsverteilung in der Probe (14) durch mindestens eine bewegliche Komponente einer Strahlpositionierungsvorrichtung (17) in einem Strahlengang des Beleuchtungslichts (12) bewirkt wird.

5. Verfahren nach Anspruch 4, **dadurch gekennzeichnet, dass** die Fluktuation der Position der Intensitätsverteilung durch einen inhärenten Jitter der Strahlpositionierungsvorrichtung (17) bewirkt wird.

6. Verfahren nach Anspruch 4 oder 5, **dadurch gekennzeichnet, dass** die Fluktuation der Position der Intensitätsverteilung durch einen regelungsbasierten Jitter der Strahlpositionierungsvorrichtung (17) bewirkt wird.

7. Verfahren nach Anspruch 6, **dadurch gekennzeichnet, dass** der regelungsbasierte Jitter durch eine gezielte Einstellung der Regelparameter konditioniert ist, insbesondere derart, dass die Fluktuation eine vorgegebene Varianz und/oder andere vorgegebene Momente aufweist und/oder dass die Fluktuation derart erfolgt, dass aktuelle Positionen (1) erreicht werden, die einen vorgegebenen oder vorgebbaren Mindestabstand zur Nominalposition (2) aufweisen.

8. Verfahren nach einem der vorhergehenden Ansprüche, **dadurch gekennzeichnet, dass** die Fluktuation der Position um die Nominalposition (2) normalverteilt ist.

9. Verfahren nach einem der vorhergehenden Ansprüche, **dadurch gekennzeichnet, dass** ein Steuereingang der Strahlpositionierungsvorrichtung (17) mit einem Zufallssignal beaufschlagt wird, insbesondere wobei das Zufallssignal eine vorgegebene oder vorgebbare Ortsverteilung aufweist, weiter insbesondere wobei die Ortsverteilung rotationssymmetrisch bezüglich einer Achse ist, die die Nominalposition (2) enthält, wobei die Achse bevorzugt parallel zu einer optischen Achse eines Objektivs (24) eines MINLFUX-Mikroskops (40) oder eines STED-MINFLUX-Mikroskops (41) ist und/oder wobei die Ortsverteilung an der Nominalposition (2) ein lokales Minimum aufweist.

10. Verfahren nach einem der vorhergehenden Ansprüche, **dadurch gekennzeichnet, dass** aus den messtechnisch erfassten Größen die jeweils aktuellen Positionen der Intensitätsverteilung des Beleuchtungslichts (12) in der Probe (14) bestimmt und den detektierten Emissionen zugeordnet werden.

11. Verfahren nach Anspruch 10, **dadurch gekennzeichnet, dass** aus den detektierten Emissionen und den zugeordneten aktuellen Positionen der Intensitätsverteilung eine Lage des Emitters (8) geschätzt wird, insbesondere wobei die Nominalposition (2) nach der Schätzung der Lage des Emitters (8) aktualisiert wird, insbesondere dass die Nominalposition (2) an die geschätzte Lage des Emitters (8) verschoben wird.

12. MINFLUX-Mikroskop (40) oder STED-MINFLUX-Mikroskop (41) für die Lokalisierung oder das Verfolgen eines vereinzelten Emitters (8) in einer Probe (14), insbesondere nach einem Verfahren gemäß einem der vorangehenden Ansprüche, umfassend
- eine Lichtquelle, die dazu ausgebildet ist, ein Beleuchtungslicht (12) bereitzustellen,
- eine Beleuchtungsoptik, die dazu ausgebildet ist, die Probe (14) in einem Nahbereich (4) des vereinzelten Emitters (8) mit einer ein lokales Intensitätsminimum aufweisenden Intensitätsverteilung des Beleuchtungslichts (12) zu beaufschlagen, wobei das Beleuchtungslicht (12) Anregungslicht (13) oder Emissionsunterdrückungslicht, insbesondere STED-Licht, ist, und wobei das Beleuchtungslicht (12) oder ein anderes Licht den Emitter (8) zur Emission von Licht anregt,
- eine Mikroskop-Steuerungseinrichtung, die ausgebildet ist, das MINFLUX-Mikroskop (40) oder STED-MINFLUX-Mikroskop (41) zu steuern,
- eine Strahlpositionierungsvorrichtung (17), die dazu ausgebildet ist, die Intensitätsverteilung des Beleuchtungslichts (12) in der Probe (14) zu verlagern,
- eine Detektionsvorrichtung, die dazu ausgebildet ist, Emissionen des Emitters (8) zu detektieren,
**dadurch gekennzeichnet, dass** das MINFLUX-Mikroskop (40) oder STED-MINFLUX-Mikroskop (41) eine Messvorrichtung zur Erfassung von Messdaten aufweist, aus denen jeweils eine aktuelle Position (1) der Intensitätsverteilung des Beleuchtungslichts (12) in der Probe (14) bestimmbar ist, wobei die Mikroskop-Steuerungseinrichtung dazu eingerichtet ist, zu einer jeweiligen detektierten Emission die jeweilige aktuelle Position (1) der Intensitätsverteilung des Beleuchtungslichts (12) in der Probe (14) und/oder die jeweiligen von der Messvorrichtung erfassten Messdaten zu registrieren.

13. MINFLUX-Mikroskop (40) oder STED-MINFLUX-Mikroskop (41) nach Anspruch 12, **dadurch gekennzeichnet, dass** die Messvorrichtung geeignet ist, dass aus den erfassten Messdaten die aktuelle Position (1) der Intensitätsverteilung des Beleuchtungslichts (12) in der Probe (14) mit einer Unsicherheit von höchstens 10 nm, bevorzugt von höchstens 5 nm, weiter bevorzugt von höchstens 2 nm und besonders bevorzugt von höchstens 1 nm bestimmbar ist.

14. MINFLUX-Mikroskop (40) oder STED-MINFLUX-Mikroskop (41) nach Anspruch 12 oder 13, **dadurch gekennzeichnet, dass** die Messvorrichtung eingerichtet ist, einen Winkel oder eine Auslenkung einer beweglichen optischen Komponente der Strahlpositionierungsvorrichtung (17) zu erfassen, insbesondere wobei die Messvorrichtung ein integriertes Winkellagemesssystem, weiter insbesondere einen integrierten Encoder, weiter insbesondere einen integrierten Rotationsencoder (20), einen Hilfslichtstrahl bzw. eine Hilfslichtquelle und /oder einen positionsempfindlichen Hilfslichtdetektor umfasst.

15. MINFLUX-Mikroskop (40) oder STED-MINFLUX-Mikroskop (41) nach einem der Ansprüche 12 bis 14, **dadurch gekennzeichnet, dass** das MINFLUX-Mikroskop (40) oder das STED-MINFLUX-Mikroskop (41) einen Signalgenerator zur Erzeugung eines Zufallssignals umfasst und dass ein Steuereingang der Strahlpositionierungsvorrichtung (17) mit dem Zufallssignal beaufschlagbar ist.
